# FASCICULE DE BREVET EUROPEEN

(11) **EP 2 212 409 B1**
(45) Date de publication et mention de la délivrance du brevet: **16.08.2017**
(21) Numéro de dépôt: 08846808.7
(22) Date de dépôt: 16.10.2008
(51) Int. Cl.: C11D 3/37, C11D 3/00

(54) **COPOLYMERE POUR LE TRAITEMENT DE LINGE OU DE SURFACE DURE**
COPOLYMER ZUR BEHANDLUNG WÄSCHE ODER HARTER OBERFLÄCHEN
COPOLYMER FOR TREATMENT OF LAUNDRY OR HARD SURFACE

(30) Priorité: 06.11.2007 FR 0707785; 06.03.2008 FR 0801226
(43) Date de publication de la demande: 04.08.2010
(73) Titulaire: Rhodia Opérations, 93306 Aubervilliers (FR)
(72) Inventeur: VUONG, Chi-Thanh, F-77185 Lognes (FR); ANTHONY, Olivier, F-95630 Meriel (FR); GEOFFROY, Veronique, F-95320 Saint-Leu La Foret (FR); LAMBERT, Florence, F-75014 Paris (FR)
(86) Numéro de dépôt international: PCT/EP2008/063962
(87) Numéro de publication internationale: WO 2009/059878

(56) Documents cités:
- EP-A- 1 362 907
- WO-A-97/45510
- WO-A-98/36046
- WO-A-99/05248
- WO-A-03/020862
- DE-A1- 4 403 409
- US-A- 4 368 146
- US-A- 5 492 988
- US-A1- 2005 039 266
- DATABASE WPI Week 199128 Thomson Scientific, London, GB; AN 1991-205960 XP002474989 -& SU 1 587 056 A (BLOOD SUBSTITUTE HORMONA) 23 août 1990 (1990-08-23)
- DATABASE WPI Week 199122 Thomson Scientific, London, GB; AN 1991-162180 XP002474990 -& SU 1 578 083 A (MOSVODOKANALNIIPROEKT) 15 juillet 1990 (1990-07-15)
- TARA E. GOTTSCHALCK, G.N. MCEWEN JR.: "International Cosmetic Ingredient Dictionary and Handbook" 2006, THE COSMETIC, TOILETRY, AND FRAGRANCE ASSOCIATION , WASHINGTON, US , XP002506934 page 1847

## Description

La présente invention a pour objet l'utilisation d'un copolymère dans une composition de nettoyage ou rinçage de linge ou de nettoyage de surface dure. La composition comprend un copolymère synthétique, comprenant des unités dérivant du chlorure de N,N-diméthyldiallylammonium et des unités dérivant d'un vinyl-lactame.

La présente invention a notamment pour objet l'utilisation d'un copolymère dans une composition nettoyante ou rinçante destinée au traitement de surfaces de type textile ou de surfaces dures industrielles, domestiques ou de collectivités, notamment de type céramique, carrelage, vitre, métal, mélamine, formica ou plastique, visant à conférer à celles-ci notamment des propriétés de séchage amélioré, et/ou des propriétés rémanentes antidéposition et/ou antiadhésion des salissures ; elle peut en outre apporter à celles-ci des propriétés d'antistatisme, de brillance, des propriétés antidérapantes.

L'invention a plus particulièrement pour objet l'utilisation d'un copolymère dans une composition nettoyante ou rinçante destinée au traitement d'une surface, composition qui soit apte à conférer à celle-ci des propriétés de séchage amélioré et/ou des propriétés rémanentes d'hydrophilie, antidéposition et/ou antiadhésion des salissures, de manière à éviter la présence ultérieure de traces dues en particulier :
- au séchage des gouttes d'eau déposées sur ladite surface (par exemple dépôt de sels minéraux).
- à l'accrochage de particules minérales ou organiques présentes dans l'air ambiant (cas du nettoyage de gratte-ciels) ou déposées par contact (cas du nettoyage des sols, des toilettes ...)
- au dépôt par éclaboussure de composés organiques gras (graisses de cuisine)
- au dépôt de savons et de leur sels métalliques
- au dépôt de composés d'origine végétales de type hydrocolloides ou polysaccharides.

Les formulations détergentes commerciales permettent de nettoyer efficacement les surfaces dures industrielles, domestiques ou de collectivité. Elles sont généralement constituées d'une solution aqueuse de tensioactifs, notamment de tensioactifs non ioniques et anioniques, ou non-ioniques et cationiques, de solvants, d'alcool(s) pour faciliter le séchage, et éventuellement d'agents séquestrants et de bases ou acides pour ajuster le pH. Un inconvénient fréquent de ces formulations détergentes consiste en ce que le contact ultérieur de la surface dure avec de l'eau conduit lors du séchage à la formation de traces. En outre le traitement par ces formulations n'est, pour la plupart d'entre elles, que purement curatif et non préventif. Ainsi, les nettoyants industriels ou ménagers sont efficaces pour nettoyer la surface dure salie mais ne permettent pas de prévenir ou limiter son encrassement futur, ou même de favoriser son nettoyage ultérieur.

Pour les traitements et/ou la modification de surfaces dures, notamment pour le nettoyage de surfaces dures, il est connu d'utiliser des compostions comprenant des polymères synthétiques.

Il a ainsi été proposé d'utiliser des polymères ou copolymères linéaires pour hydrophiliser les surfaces dures, par exemples des copolymères dérivant de monomères cationiques, d'acide acrylique et éventuellement d'autres monomères comme l'acrylamide. De telles applications et de telles compositions sont notamment décrites dans les documents EP-A-1196527, EP-A-1196528 et EP-A-1196523.

Lors de nombreuses opérations de nettoyages, on applique de l'eau ou une composition aqueuse sur l'objet à nettoyer, on rince éventuellement, puis on laisse sécher. C'est le cas par exemple lors du nettoyage de la vaisselle à la main, ou lors du nettoyage automatique de la vaisselle à l'aide d'un lave-vaisselle. La phase de séchage peut prendre un certain temps et/ou peut laisser des traces de matières hydrosolubles ou hydrodispersables (par exemple des traces de matière minérale comprise dans l'eau) et/ou des traces de souillures, généralement grasses, provenant de l'objet à nettoyer.

Il est connu d'ajouter de la poly(vinyle-pyrrolidone) (PVP) dans certaines compositions de nettoyage des surfaces dures, notamment dans des compositions de nettoyage de surfaces en carrelage ou dans des compositions de nettoyage de la surface des cuves de toilettes. Sur ces surfaces en céramique, la PVP permet un séchage rapide, et perceptible: on peut observer la composition quitter progressivement la surface, et observer un front de composition se déplacer sur la surface comme le reflux d'une vague. On parle souvent de démouillage progressif, il s'agit d'une évacuation de l'eau par écoulement plutôt que par évaporation. Ceci est apprécié du consommateur qui perçoit l'effet de la composition, et/ou qui perçoit un séchage efficace. Le séchage obtenu suite à l'application d'une composition comprenant de la PVP est effectivement rapide. L'évacuation par écoulement permet également de limiter les traces.

Toutefois la PVP est d'un domaine d'application limité: elle ne peut pas être formulée dans certaines compositions, notamment dans des compositions de nettoyage de la vaisselle, ou ne l'être que difficilement dans des fenêtres de formulations très étroites. Dans les compositions de nettoyage de la vaisselle, généralement significativement chargées en tensioactifs, elle est en effet mal dispersable, et/ou de faible stabilité dans ces compositions. Elle peut en particulier nuire à la transparence des compositions, alors que la transparence est une qualité recherchée par les consommateurs.

La qualité du séchage suite à l'application d'une composition de nettoyage de la vaisselle notamment, reste à améliorer. Il existe un besoin pour des compositions de traitement et/ou de modification de surfaces, notamment de surfaces dures, notamment des compositions de nettoyage de la vaisselle, présentant des propriétés de séchage améliorées. Il existe un besoin pour des composés pouvant apporter de telles améliorations et pouvant être formulés facilement dans des compositions de traitement et/ou de modification de surfaces.

De manière générale, il subsiste un besoin pour de nouvelles utilisations de polymères synthétiques, afin notamment de proposer des compositions plus performantes pour certaines fonctions, et/ou des compositions présentant de nouvelles propriétés, et/ou des compositions moins onéreuses, et/ou des compositions comprenant de plus faibles quantités de matière active.

La présente invention répond à au moins un des besoins mentionnés ci-dessus, en proposant l'utilisation d'un copolymère comprenant des unités cationiques A, et d'autres unités B, caractérisé en ce que:
- les unités A dérivant du chlorure de N,N-dimethyldiallylammonium, et
- les unités B sont des unités dérivant d'un vinyl-lactame,
dans une composition de nettoyage ou rinçage ou de nettoyage de surface dure. Dans la suite, le copolymère est désigné par "copolymère selon l'invention".

Le copolymère selon l'invention peut notamment procurer les avantages suivants
- amélioration des propriétés antidéposition et/ou antiadhésion des salissures susceptibles de se déposer sur lesdites surfaces, et/ou
- amélioration du séchage.

Le copolymère selon l'invention peut notamment procurer les avantages suivants, notamment par exemple dans une composition de nettoyage de la vaisselle:
- facilité de formulation de la composition,
- modularité et/ou adaptabilité à un grand nombre de compositions,
- conservation de la transparence de la composition,
- démouillage progressif, de préférence suffisamment lent pour être perceptible et/ou pour éviter des traces,
- séchage accéléré,
- traces laissées au séchage exemptes ou diminuées,
- séchage perceptible par le consommateur, notamment par observation,
- combinaison d'au moins deux de ces avantages.

Ces avantages sont particulièrement intéressants dans le cadre du nettoyage des objets transparents, en particulier des objets de vaisselle transparents, notamment en verre ou en cristal. Ces avantages et/ou la perception de ces avantages peuvent notamment être utilement communiqués, en relation avec le copolymère ou simplement en relation avec la composition par tout moyen de communication lié au produit, par exemple sur l'étiquette, dans une publicité, via un service consommateurs, un site internet.

Le copolymère selon l'invention est de préférence mis en oeuvre ou est présent dans ladite composition en quantité efficace pour apporter auxdites surfaces un séchage amélioré, et/ou des propriétés antidéposition et/ou antiadhésion des salissures susceptibles de se déposer sur lesdites surfaces. La composition peut en particulier présenter un démouillage lent et/ou un séchage rapide et/ou sans trace.

L'invention concerne aussi un procédé de nettoyage ou rinçage de linge ou de nettoyage de surface dure, comprenant une étape d'application sur le linge ou sur la surface dure d'une composition comprenant ledit copolymère, ladite composition étant éventuellement diluée dans de l'eau au préalable.

### Définitions

Dans la présente demande, on désigne par unité dérivant d'un monomère, pour les unités différentes des unités A_{précurseur}, une unité qui peut être obtenue directement à partir dudit monomère par polymérisation. Ainsi, par exemple, une unité dérivant d'un ester d'acide acrylique ou méthacrylique ne couvre pas une unité de formule -CH₂-CH(COOH)-, -CH₂-C(CH₃)(COOH)-, -CH₂-CH(OH)-, respectivement, obtenue par exemple en polymérisant un ester d'acide acrylique ou méthacrylique, ou de l'acétate de vinyle, respectivement, puis en hydrolysant. Une unité dérivant d'acide acrylique ou méthacrylique couvre par exemple une unité obtenue en polymérisant un monomère (par exemple un ester d'acide acrylique ou méthacrylique), puis en faisant réagir (par exemple par hydrolyse) le polymère obtenu de manière à obtenir des unités de formule -CH₂-CH(COOH)-, ou -CH₂-C(CH₃)(COOH)-. Une unité dérivant d'un alcool vinylique couvre par exemple une unité obtenue en polymérisant un monomère (par exemple un ester vinylique), puis en faisant réagir (par exemple par hydrolyse) le polymère obtenu de manière à obtenir des unités de formule -CH₂-CH(OH)-. Des unités dérivant d'un monomère A peuvent par exemple avoir été obtenues par polymérisation de monomères A_{précurseurs} puis réaction post-polymérisation pour obtenir des unités comprenant le groupe bétaïne. Les unités A ne sont pas considérées comme des unités dérivant de monomères A_{précurseur} ne comprenant pas de groupe bétaïne.

Dans la présente demande, sauf indications contraires, lorsqu'on parlera de masse molaire, il s'agira de la masse molaire moyenne en masse absolue, exprimée en g/mol. Celle-ci peut être déterminée par chromatographie de perméation de gel aqueux (GPC), par diffusion de lumière (DDL ou encore MALLS pour un éluant aqueux), avec un éluant aqueux ou un éluant organique (par exemple le formamide) selon la composition du polymère.

Dans la présente demande, sauf mention contraire, les quantités et proportions sont indiquées en matière active (par opposition à la matière diluée ou dispersée), et en poids.

### Copolymère

Le copolymère selon l'invention comprend des unités cationiques A, et d'autres unités B. Les unités A sont des unités dérivant du chlorure de N,N-diméthyldiallylammonium. Les unités B sont des unités dérivant d'un vinyl-lactame.

Il s'agit de préférence d'un copolymère statistique linéaire. On note que la charge positive, portée par un atome d'azote, est typiquement localisée dans un groupe latéral à la chaine macromoléculaire que constitue le copolymère. La chaine macromoléculaire est typiquement une chaine polyéthylénique (provenant des insaturations des monomères), avec des groupes cationiques et des groupes lactame latéraux.

### Unités A cationiques

Les unités A sont des unités dérivant du chlorure de N,N-diméthyldiallylammonium. Les unités A peuvent notamment être obtenues par copolymérisation, de monomères comprenant les monomères A, en mélange avec d'autres monomères). Elles peuvent être obtenues également par polymérisation, afin de former des unités A_{précurseur}, de monomères comprenant des monomères précurseurs des unités A (en mélange avec d'autres monomères), conduisant à des unités précurseur des unités A, puis modification chimique des unités précurseurs afin d'obtenir les unités A. De telles modifications sont connues. Il peut par exemple s'agir de quaternisations, par exemple à l'aide de diméthyle sulfate ou d'halogenoalkylammonium quaternaires ou d'halogenoalkylhydroxyalkylammonium quaternaires.

### Unités B

Les unités B sont des unités dérivant d'un vinyl-lactame, comme le vinyl-caprolactame ou la vinyle-pyrrolidone. De tels monomères sont connus. On précise qu'il s'agit de préférence de N-vinyle-pyrrolidone.

### Compositions particulières du copolymère

Le copolymère selon l'invention peut comprendre de unités Cₐᵤₜᵣₑ, optionnelles, différentes des unités A et B mentionnées ci-dessus. Les unités A et B peuvent représenter de 1% à 100%, de préférence de 50 à 100%, de préférence de 75 à 100% en moles des unités du copolymère.

Selon un mode de réalisation particulier, le copolymère comprend:
- de 1 à 25% en moles des unités A, de préférence de 3 à 13% et
- de 75 à 99% en moles des unités B, de préférence de 87 à 97%.

Selon un mode de réalisation particulier le rapport molaire entre les unités A et les unités B est compris entre 1/99 et 25/75, de préférence entre 5/95 et 15/85.

Le copolymère peut notamment comprendre, à titre d'unités Cₐᵤₜᵣₑ:
- des unités C_{N} non ioniques, hydrophiles ou hydrophobes, et/ou
- des unités C_{A} anioniques ou potentiellement anioniques, et/ou
- des unités C_{C} cationiques ou potentiellement cationiques, différentes des unités A, et/ou
- des unités C_{Z} zwitterioniques.

Selon un mode avantageux, le copolymère ne comprend pas plus de 25% en moles au total de telles unités, de préférence pas du tout. Selon un mode avantageux, le copolymère ne comprend pas plus de 25% en moles au total d'unités C_{N}, de préférence pas du tout. Selon un mode avantageux, le copolymère ne comprend pas plus de 25% en moles au total d'unités C_{A}, de préférence pas du tout. Selon un mode avantageux, le copolymère ne comprend pas plus de 25% en moles au total d'unités C_{C}, de préférence pas du tout. Selon un mode avantageux, le copolymère ne comprend pas plus de 25% en moles au total d'unités C_{Z}, de préférence pas du tout.

Selon des modes de réalisation particuliers le copolymère est substantiellement dénué (il en comprend moins de 1% en moles, de préférence moins de 0,5%, de préférence pas du tout) des unités suivantes:
- les unités C_{C}, et/ou
- les unités C_{N} choisies parmi
   - les unités alcoxylées de formule suivante:

      -CH₂-CHR⁶[-X²-(CH₂-CH₂-O)ₙ-R⁷]-

      dans laquelle:
      - R⁶ est un atome d'hydrogène ou un groupe méthyle,
      - X² est un groupe de formule -CO-O-, -CO-NH- ou -C₆H₄-CH₂-
      - n est un nombre entier ou moyen supérieur ou égale à 1,
      - R⁷ est un atome d'hydrogène, un groupe alkyle ou un groupe tristyrylphenyl, et/ou
   - les unités hydroxylées de formule suivante:

      -CH₂-CHR⁶[-X²-R⁸]-

      dans laquelle:
      - R⁶ est un atome d'hydrogène ou un groupe méthyle,
      - X² est un groupe de formule -CO-O-, -CO-NH- ou -C₆H₄-CH₂-
      - R⁸ est un groupe hydrocarboné à au moins deux atomes de carbone, comprenant au moins deux groupes -OH, de préférence sur deux atomes de carbone consécutifs, et/ou
   - les unités acrylates ou méthacrylates d'hydroxyalkyle.
   - les unités C_{N} hydrophobes, et/ou
   - les unités C_{Z} comprenant un groupe sulfobétaïne, de préférence toutes les unités C_{Z} zwitterioniques.
Ainsi, selon un mode de réalisation particulier:
- le copolymère est substantiellement dénué d'unités zwitterioniques, et
- le copolymère est substantiellement dénué d'unités anioniques ou potentiellement anioniques.

Selon une mode de réalisation particulièrement utile unités A dérivent de chlorure de N,N-diméthyldiallylammonium (DADMAC) et les unités B dérivent de vinyl-pyrrolidone. Les copolymères suivants s'avèrent tout particulièrement utiles: copolymères comprenant:
- de 1 à 25% en moles, de préférence de 3 à 13%, d'unités A dérivant de chlorure de N,N-diméthyldiallylammonium (DADMAC), et
- de 75 à 99% en moles, de préférence de 87 à 97%, d'unités B dérivant de vinyl-pyrrolidone.

On mentionne que le copolymère peut se présenter sous toute forme pratique, par exemple sous forme solide, sèche ou sous forme vectorisée, par exemple sous forme d'une solution ou d'une émulsion ou d'une suspension, notamment sous forme d'une solution aqueuse. La forme vectorisée, par exemple une solution aqueuse, peut notamment comprendre de 5 à 50% en poids du copolymère, par exemple de 10 à 30% en poids. La solution aqueuse peut notamment être une solution obtenue par un procédé de préparation en phase aqueuse, notamment un procédé de polymérisation radicalaire.

Le polymère de l'invention peut notamment présenter une masse molaire allant de 20000 g/mol à 1000000 g/mol, de préférence de 100000 à 400000 g/mol.

### Procédé de préparation du copolymère

Le copolymère selon l'invention peut être préparé par tout procédé approprié. Le procédé comprendra généralement une étape de polymérisation (copolymérisation) radicalaire, où sont mis en présence des monomères, et une source de radicaux libre.

Selon un mode de réalisation on polymérise (copolymérisation) un mélange de monomères A_{précurseur} et de vinyle-lactame en présence d'une source de radicaux libres, pour obtenir un copolymère comprenant des unités B et des unités dérivant des monomères A_{précurseur}, puis on modifie chimiquement ces unités pour obtenir des unités A (modification post polymérisation). Des modifications peuvent notamment être des quaternisations d'unités dérivant monomères A_{précurseur} comprenant un groupe amine ternaires.

Selon un mode de réalisation préféré, le procédé comprend une étape de copolymérisation par mise en présence:
- d'un monomère A (ou A_{précurseur}), dérivant du chlorure de N,N-diméthyldiallylammonium.
- de vinyle-lactame, et
- d'une source de radicaux libres.

Les procédés de polymérisation radicalaires, sont connus de l'homme du métier. On peut varier en particulier la source de radicaux libres, la quantité de radicaux libre, les phases d'introductions des différents composés (monomères, source de radicaux livres etc...), la température de polymérisation, et d'autres paramètres ou conditions opératoires de manière connue et appropriée. On donne quelques détails ou indications plus bas.

Les procédés peuvent être des procédés de type discontinu ("batch" en anglais), de type semi-continu ("semi-batch" en anglais) ou même de type continu. Un procédé de type semi-continu comprend typiquement une phase d'introduction progressive d'au moins un monomère (comonomère), de préférence de tous les monomères (comonomères), dans un réacteur, sans sortie continue du produit de réaction, le produit de réaction, comprenant le polymère, étant récupéré en une fois en fin de réaction.

On note que la polymérisation peut avantageusement être mise en oeuvre en solution aqueuse.

Toute source de radicaux libres peut être utilisée. On peut notamment générer des radicaux libres spontanément par exemple par élévation de la température, avec des monomères appropriés comme le styrène. On peut générer des radicaux libres par irradiation, notamment par irradiation UV, de préférence en présence d'initiateurs appropriés sensibles aux UV. On peut utiliser des initiateurs (ou "amorceurs") ou des systèmes d'initiateurs, de type radicalaire ou redox. La source de radicaux libre peut être hydrosoluble ou non. On pourra de préférence utiliser des amorceurs hydrosolubles, ou au moins partiellement hydrosolubles (par exemples hydrosolubles à au moins 50% en poids).

De manière générale, plus la quantité de radicaux libres est élevée, plus la polymérisation est initiée facilement (elle est favorisée), mais plus les masses moléculaires des copolymères obtenus sont faibles.

On peut notamment utiliser les initiateurs suivants :
- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
- les mélanges de peroxyde d'hydrogène, d'alkyle, peresters, percarbonates et similaires et de n'importe lequel des sels de fer, des sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

La température de polymérisation peut notamment être comprise entre 25°C et 95°C. La température peut dépendre de la source de radicaux libre. S'il ne s'agit pas d'une source de type amorceur UV, on préférera opérer entre 50°C et 95°C, plus préférablement entre 60°C et 80°C. De manière générale, plus la température est élevée, plus la polymérisation est initiée facilement (elle est favorisée), mais plus les masses moléculaires des copolymères obtenus sont faibles.

### Composition et utilisations

La composition selon l'invention peut se présenter sous des formes variées. Elle peut notamment se présenter sous une forme liquide. Elle peut alors comprendre un vecteur d'application liquide, par exemple de l'eau, un alcool ou un mélange hydro-alcoolique.

La composition selon l'invention comprend le plus souvent au moins un tensioactif.

Selon un mode de réalisation la surface est un textile, le traitement étant de préférence un nettoyage ou un rinçage du linge. On mentionne que le traitement est typiquement un traitement appliqué sur un article textile fini, où les fibres sont assemblées. En d'autres termes le traitement n'est typiquement pas un traitement mis en oeuvre lors de la fabrication de l'article textile. Il s'agit typiquement d'une étape de traitement (nettoyage, rinçage, et/ou adoucissage) après une première utilisation (au moins) par le consommateur. Le linge peut notamment comporter des articles en coton ou à base de coton et/ou de laine. Il peut alternativement ou en complément comprendre des articles en fibres synthétique, notamment en polyester, en polyamide, en acrylique.

Les compositions peuvent être des compositions pour le nettoyage ou rinçage du linge. La forme de la composition et les conditions d'usage peuvent être multiples.
Ladite composition peut se présenter
* sous forme d'un solide (poudre, granulés, tablettes ...) ou d'une dispersion ou d'une solution aqueuse concentrée, mis en contact avec les articles à traiter, après dilution dans l'eau ;
* sous forme d'une dispersion ou d'une solution aqueuse concentrée préalablement déposée sur les articles secs à traiter avant dilution dans l'eau ;
* sous forme d'une dispersion ou d'une solution aqueuse à déposer directement sur les articles secs à traiter sans dilution ou d'un support solide (bâton) comprenant le copolymère, à appliquer directement sur les articles secs à traiter ;
* sous forme d'un support solide insoluble comprenant le copolymère mis en contact directement avec les articles à traiter à l'état humide.

Ainsi la composition de l'invention peut être :
- une formulation détergente solide ou liquide susceptible de former directement par dilution un bain lessiviel ;
- une formulation rinçante et/ou adoucissante liquide susceptible de former directement par dilution un bain de rinçage et/ou d'adoucissage ;
- un matériau solide, textile notamment, comprenant le copolymère, destiné à être mis en contact avec les articles humides dans un sèche-linge (ledit matériau solide est appelé ci-après "additif de séchage") ;
- une formulation aqueuse de repassage ;
- un additif de lavage ("prespotter") destiné à être déposé sur les articles secs préalablement à une opération de lavage à l'aide d'une formulation détergente contenant ou ne contenant pas le copolymère (ledit additif est appelé ci-après "additif de lavage").

La composition selon l'invention est particulièrement bien adaptée au soin des articles (linge) notamment à base coton, en particulier contenant au moins 35% de coton. Elle est tout particulièrement adaptée au soin des articles colorés.

La quantité de copolymère selon l'invention présente dans la composition de traitement des articles textiles selon l'invention peut aller de 0,05 à 10 % en sec du poids de ladite composition en sec.

D'autres constituants peuvent être présents dans la composition de traitement des textiles. Ladite composition peut contenir au moins un agent tensioactif et/ou un additif de détergence et/ou de rinçage et/ou d'adoucissage des articles en fibres textiles. La nature de ces constituants est fonction de l'usage recherché de ladite composition.

Ainsi, lorsqu'il s'agit d'une formulation détergente, pour le lavage des articles en fibre textiles, celle-ci comprend généralement :
- au moins un agent tensioactif naturel et/ou synthétique,
- au moins un adjuvant de détergence ("builder")
- éventuellement un agent ou un système oxydant,
- et une série d'additifs spécifiques.

La formulation de traitement des textiles peut notamment comprendre des agents tensioactifs en une quantité correspondant à environ 1 à 40% en poids par rapport à la formulation détergente.

Selon un autre mode de réalisation la surface est une surface dure, le traitement étant de préférence un nettoyage de surface dure. Les surfaces dures et leurs traitements et/ou modifications, incluent dans la présente invention la vaisselle et son nettoyage et/ou rinçage. Le traitement peut être un nettoyage de la vaisselle, automatique ou à la main.

La composition selon l'invention est notamment susceptible d'apporter aux surfaces dures à traiter des propriétés antidéposition et/ou antiadhésion des salissures et/ou des propriétés de séchage amélioré. Elle peut être par exemple:
- Une composition nettoyante ou rinçante à usage ménager ; elle peut être universelle ou peut être plus spécifique, comme une composition pour le nettoyage ou le rinçage
   - de salle de bain ; ladite composition empêche notamment le dépôt des sels de savon autour des baignoires et sur les lavabos, prévient la croissance et/ou le dépôt de cristaux de calcaire sur ces surfaces, et retarde l'apparition de tâches de savon ultérieures.
   - de cuisine ; ladite composition permet d'améliorer le nettoyage des plans de travail lorsque ceux-ci sont souillés par des salissures grasses insaturées susceptibles de réticuler dans le temps ; les tâches grasses partent à l'eau sans frotter.
   - des sols (en linoleum, carrelage ou ciment) ; ladite composition permet d'améliorer l'enlèvement des poussières, des salissures de types argilo-calcaires (terre, sable, boue...) ; les tâches sur le sol peuvent être nettoyées sans effort par simple balayage, sans brossage ; en outre ladite composition apporte des propriétés antidérapantes.
   - des toilettes ; ladite composition permet d'éviter l'adhésion de traces d'excréments sur la surface ; le seul flux de la chasse d'eau est suffisant pour éliminer ces traces ; l'utilisation dune brosse est inutile.
   - des vitres ou miroirs ; ladite composition permet d'éviter le dépôt de salissures particulaires minérales ou organiques sur la surface.
   - de la vaisselle, à la main ou à l'aide d'une machine automatique ; ladite composition permet, d'observer un séchage amélioré.
- Une composition nettoyante ou rinçante à usage industriel ou de collectivité ; elle peut être universelle ou plus spécifique, comme une composition pour le nettoyage
   - des réacteurs, des lames en acier, des éviers, des cuves.
   - de la vaisselle
   - des surfaces extérieures ou intérieures des bâtiments
   - des vitres des bâtiments et immeubles
   - des bouteilles

La composition selon l'invention peut se présenter sous une forme quelconque et peut être utilisée de multiples façons.
Ainsi, elle peut être sous la forme
- d'un liquide gélifié ou non, à déposer tel quel, notamment par pulvérisation,
   - directement sur les surfaces à nettoyer ou rincer, ou
   - sur une éponge ou un autre support (article en cellulose par exemple, tissé ou non-tissé) avant d'être appliqué sur la surface à traiter
- d'un liquide gélifié ou non, à diluer dans de l'eau (éventuellement additionnée d'un autre solvant) avant d'être appliqué sur la surface à traiter
- d'un liquide gélifié ou non, emprisonné dans un sachet hydrosoluble
- d'une mousse
- d'un aérosol
- d'un liquide absorbé sur un support absorbant en un article tissé ou non-tissé notamment (lingette)
- d'un solide, tablette notamment, éventuellement emprisonnée dans un sachet hydrosoluble, ladite composition pouvant représenter tout ou partie de la tablette.

Pour une bonne réalisation de l'invention, le copolymère selon l'invention est présent dans la composition faisant l'objet de l'invention en quantité efficace pour modifier et/ou traiter la surface. Il peut par exemple s'agir d'une quantité efficace pour apporter auxdites surfaces des propriétés antidéposition et/ou antiadhésion des salissures susceptibles de se déposer sur lesdites surfaces, et/ou pour apporter un séchage amélioré.

Ladite composition faisant l'objet de l'invention peut contenir, selon son application, de 0,001 à 10% de son poids du copolymère de l'invention.

Le pH de la composition ou le pH d'utilisation de la composition selon l'invention, peut varier, selon les applications et les surfaces à traiter, de 1 à 14, voire même de 0,5 à 14. Les pH extrêmes sont classiques dans les applications de type nettoyage industriel ou de collectivité. Dans le domaine des applications ménagères, les pH vont plutôt de 1 à 13 suivant les applications.

Ladite composition peut être mise en oeuvre pour le nettoyage ou le rinçage des surfaces dures, en quantité telle que, après rinçage éventuel et séchage, la quantité de polybétaïne (B) déposée sur la surface soit de 0,0001 à 10 mg/m², de préférence de 0,001 à 5 mg/m² de surface traitée.

La composition selon l'invention, lorsqu'elle est mise en oeuvre dans le cadre d'un traitement d'une surface textile, telle que du linge à nettoyer, est notamment susceptible de protéger les couleurs du textile et/ou de prévenir le transfert des couleurs d'un article vers un autres en particulier au sein d'un bain lessiviel. Ainsi on peut utiliser le copolymère de l'invention à titre d'agent de protection de la couleur du linge et/ou d'agent de prévention du transfert des couleurs.

La composition nettoyante ou rinçante selon l'invention comprend de préférence en outre au moins un tensioactif. Celui-ci peut être non-ionique, anionique, amphotère, zwitterionique ou cationique. Il peut s'agir également d'un mélange ou d'une association de tensioactifs.

Parmi les agents tensioactifs anioniques, on peut citer à titre d'exemple :
- les alkylesters sulfonates de formule R-CH(SO₃M)-COOR' où R représente un radical alkyle en C₈₋₂₀, de préférence en C₁₀-C₁₆, R' un radical alkyle en C₁-C₆, de préférence en C₁-C₃ et M un cation alcalin (sodium, potassium, lithium), ammonium substitué ou non substitué (méthyl-, diméthyl-, triméthyl-, tetraméthylammonium, diméthylpiperidinium ...) ou dérivé d'une alcanolamine (monoéthanolamine, diéthanolamine, triéthanolamine ...). On peut citer tout particulièrement les méthyl ester sulfonates dont les radical R est en C₁₄-C₁₆ ;
- les alkylsulfates de formule ROSO₃M, où R représente un radical alkyle ou hydroxyalkyle en C₅-C₂₄, de préférence en C₁₀-C₁₈ (tels que les sels d'acides gras dérivés du coprah et du suif), M représentant un atome d'hydrogène ou un cation de même définition que ci-dessus, ainsi que leurs dérivés éthoxylénés (OE) et/ou propoxylénés (OP), présentant en moyenne de 0,5 à 30 motifs, de préférence de 0,5 à 10 motifs OE et/ou OP ;
- les alkylamides sulfates de formule RCONHR'OSO₃M où R représente un radical alkyle en C₂-C₂₂, de préférence en C₆-C₂₀, R' un radical alkyle en C₂-C₃, M représentant un atome d'hydrogène ou un cation de même définition que ci-dessus, ainsi que leurs dérivés éthoxylénés (OE) et/ou propoxylénés (OP), présentant en moyenne de 0,5 à 60 motifs OE et/ou OP ;
- les sels d'acides gras saturés ou insaturés en C₈-C₂₄, de préférence en C₁₄-C₂₀, les alkylbenzènesulfonates en C₉-C₂₀, les alkylsulfonates primaires ou secondaires en C₈-C₂₂, les alkylglycérol sulfonates, les acides polycarboxyliques sulfonés décrits dans GB-A-1 082 179, les sulfonates de paraffine, les N-acyl N-alkyltaurates, les iséthionates, les alkylsuccinamates les alkylsulfosuccinates, les monoesters ou diesters de sulfosuccinates, les N-acyl sarcosinates, les sulfates d'alkylglycosides, les polyéthoxycarboxylates, les monoglycérides sulfates, et les condensats de chlorure d'acides gras avec des hydroxyalkylsulfonates ; le cation peut être un métal alcalin (sodium, potassium, lithium), un reste ammonium substitué ou non substitué (méthyl-, diméthyl-, triméthyl-, tetraméthylammonium, diméthylpiperidinium ...) ou dérivé d'une alcanolamine (monoéthanolamine, diéthanolamine, triéthanolamine ...).
- les alkylphosphates, les phosphates esters alkylés ou alkylarylés comme les RHODAFAC RA600, RHODAFAC PA15 ou RHODAFAC PA23 commercialisés par la société RHODIA ; le cation peur être un métal alcalin (sodium, potassium, lithium), un reste ammonium substitué ou non substitué (méthyl-, diméthyl-, triméthyl-, tetraméthylammonium, diméthylpiperidinium ...) ou dérivé d'une alcanolamine (monoéthanolamine, diéthanolamine, triéthanolamine ...).

Une description d'agents tensioactifs non-ioniques est donnée dans US-A-4,287,080 et US-A-4,470,923. On peut citer en particulier les condensats d'oxyde d'alkylène, notamment d'oxyde d'éthylène et éventuellement de propylène avec des alcools, des polyols, des alkylphénols, des esters d'acides gras, des amides d'acides gras et des amines grasses ; les amines-oxydes, les dérivés de sucre tels que les alkylpolyglycosides ou les esters d'acides gras et de sucres, notamment le monopalmitate de saccharose ; les oxydes de phosphine tertiaire à longue chaîne (de 8 à 28 atomes de carbone) ; les dialkylsulfoxydes ; les copolymères séquencés de polyoxyéthylène et de polyoxypropylène ; les esters de sorbitan polyalkoxylés ; les esters gras de sorbitan, les poly(oxyde d'éthylène) et amides d'acides gras modifiés de manière à leur conférer un caractère hydrophobe (par exemple, les mono- et diéthanolamides d'acides gras contenant de 10 à 18 atomes de carbone).
On peut citer tout notamment
- les acides carboxyliques aliphatiques en C₈-C₁₈ polyoxyalkylénés contenant de 2 à 50 motifs oxyalkylènes (oxyéthylène et/ou oxypropylène), en particulier ceux en C₁₂ (moyenne) ou en C₁₈ (moyenne)
- les alcools aliphatiques en C₆-C₂₄ polyoxyalkylénés contenant de 2 à 50 motifs oxyalkylènes (oxyéthylène et/ou oxypropylène), en particulier ceux en C₁₂ (moyenne) ou en C₁₈ (moyenne) ; on peut mentionner les Antarox B12DF , Antarox FM33 , Antarox FM63 , Antarox V74 de Rhodia, Plurafac LF 400 , Plurafac LF 220 de BASF, Rhodasurf ID 060 , Rhodasurf ID 070, Rhodasurf LA 42 de Rhodia, Synperonic A5, A7, A9 de ICI
- les amine oxydes comme le dodécyl di(2-hydroxyéthyl)amine oxyde
- les phosphine oxydes, comme le tetradécyl diméthyl phosphine oxyde

Parmi les agents tensioactifs amphotères, on peut mentionner
- les alkyl iminopropionates ou iminodipropionates de sodium, comme les Mirataine H2C HA et Mirataine JC HA de Rhodia.
- les alkylamphoacétates ou alkylamphodiacétates dont le groupe alkyle contient de 6 à 20 atomes de carbone, comme le Miranol C2M Conc NP commercialisé par RHODIA
- les dérivés amphotères des alkylpolyamines comme l'AMPHIONIC XL^{®} commercialisé par RHODIA, AMPHOLAC 7T/X^{®} et AMPHOLAC 7C/X^{®} commercialisés par BEROL NOBEL.

Parmi les agents tensioactifs zwitterioniques on peut citer ceux décrits dans U.S. 5,108,660,
Les tensioactifs zwitterioniques préférés sont alkyldiméthylbétaïnes, les alkylamidopropyldiméthyl-bétaïnes, les alkyldiméthylsulfobétaïnes ou les alkylamidopropyldiméthyl-sulfobétaïnes comme le Mirataine JCHA ou H2CHA, le Mirataine CBS commercialisés par Rhodia ou des ceux du même type commercialisés par Sherex Company sous le nom de "Varion CADG Betaine" et "Varion CAS Sulfobetaine", les produits de condensation d'acides gras et d'hydrolysats de protéines. D'autres tensioactifs zwitterioniques sont également décrits dans US-A-4,287,080, et dans US-A- 4,557,853.

Parmi les agents tensioactifs cationiques, on peut citer notamment les sels d'ammonium quaternaires de formule

R¹ R² R³ R⁴ N⁺ X⁻

où
- R , R² et R³, semblables ou différents, représentent H ou un groupe alkyle contenant moins de 4 atomes de carbone, de préférence 1 ou 2 atome(s) de carbone, éventuellement substitué par une plusieurs fonction(s) hydroxyle(s), ou peuvent former ensemble avec l'atome d'azote N⁺ au moins un cycle aromatique ou hétérocyclique
- R⁴ représente un groupe alkyle ou alkényle en C₈-C₂₂, de préférence en C₁₂-C₂₂, un groupe aryle ou benzyle, et
- X est un anion solubilisant tel que halogénure (par exemple chlorure, bromure, iodure), sulfate ou alkylsulfate (méthylsulfate), carboxylate (acétate, propionate, benzoate), alkyl ou arylsulfonate.

On peut mentionner en particulier les bromures de dodécyltriméthylammonium, de tetradécyltriméthylammonium, de cétyltriméthylammonium, le chlorure de stéaryl pyridinium, le RHODAQUAT ® TFR et le RHODAMINE ® C15 commercialisés par RHODIA, le chlorure de cétyltriméthylammonium (Dehyquart ACA et/ou AOR de Cognis), le chlorure de cocobis(2-hydroxyéthyl)éthylammonium (Ethoquad C12 de Akso Nobel).

Peuvent également être cités d'autres agents tensioactifs cationiques comme :
- les sels d'ammonium quaternaires de formule

   R^{1'} R^{2'} R^{3'} R^{4'} N⁺ X⁻

   où
   - R^{1'} et R^{2'}, semblables ou différents, représentent H ou un groupe alkyle contenant moins de 4 atomes de carbone, de préférence 1 ou 2 atome(s) de carbone, éventuellement substitué par une plusieurs fonction(s) hydroxyle(s), ou peuvent former ensemble avec l'atome d'azote N⁺ un cycle hétérocyclique
   - R^{3'} et R^{4'} représentent un groupe alkyle ou alkényle en C₈-C₂₂, de préférence en C₁₀-C₂₂, un groupe aryle ou benzyle, et
   - X est un anion tel que halogénure (par exemple chlorure, bromure, iodure), sulfate ou alkylsulfate (méthylsulfate), carboxylate (acétate, propionate, benzoate), alkyl ou arylsulfonate.

On peut mentionner en particulier : les chlorures de dialkyldiméthyl ammonium comme le ditallow diméthyl ammonium chlorure ou méthylsulfate ..., les chlorures d'alkylbenzyldiméthylammonium.
- les sels de C₁₀-C₂₅alkylimidazolium comme les méthylsulfates de C₁₀-C₂₅alkylimidazolinium
- les sels de polyamines substituées comme le N-tallow-N,N',N',tri-éthanol-1,3-propylènediamine dichlorure ou diméthylsulfate, N-tallow-N,N,N',N',N'-pentaméthyl-1,3-propylène diamine dichlorure.

Des exemples supplémentaires de tensioactifs appropriés sont des composés généralement utilisés en tant qu'agents tensioactifs désignés dans les manuels bien connus "Surface Active Agents", volume I par Schwartz et Perry et "Surface Active Agents and Detergents", volume II par Schwartz, Perry et Berch.

Les agents tensioactifs peuvent représenter de 0,005 à 60 %, notamment de 0,5 à 40% du poids de la composition de l'invention, ce en fonction de la nature du ou des agent(s) tensioactif(s) et de la destination de la composition nettoyante.

Avantageusement, le rapport pondéral copolymère / tensioactif(s), est compris entre 1/1 et 1/1000, avantageusement 1/2 et 1/200.

La composition nettoyante ou rinçante selon l'invention, peut en outre comprendre au moins un additif autre, notamment choisi parmi les additis usuels présents dans les compositions de nettoyage ou de rinçage des surfaces dures.

On peut notamment citer :
◆ des agents chélatants, notamment du type phosphonates organiques et aminophosphonates hydrosolubles tels que les
   - éthane 1-hydroxy-1, 1-diphosphonates,
   - aminotri(méthylène diphosphonate)
   - vinyldiphosphonates
   - sels des oligomères ou polymères de l'acide vinylphosphonique ou vinyldiphosphonique
   - sels de co-oligomères ou copolymères statistiques de l'acide vinylphosphonique ou vinyldiphosphonique et de l'acide acrylique et/ou de l'anhydride maleïque et/ou de l'acide vinylsulfonique et/ou de l'acrylamidométhylpropane sulfonique
   - sels d'acides polycarboxyliques phosphonés
   - polyacrylates à terminaison(s) phosphonate(s)
   - sels de cotélomères de l'acide vinylphosphonique ou vinyldiphosphonique et d'acide acrylique
   comme ceux de la gamme BRIQUEST^{®} ou MIRAPOL A300 ou 400 de RHODIA (à raison de 0 à 10 %, de préférence de 0 à 5% du poids total de composition nettoyante);
◆des agents séquestrants ou antitartre comme
   - les acides polycarboxyliques ou leurs sels hydrosolubles et les sels hydrosolubles de polymères ou de copolymères carboxyliques tels que les
      - éthers polycarboxylates ou hydroxypolycarboxylates
      - acides polyacétiques ou leurs sels (acide nitriloacétique, acide N,N-dicarboxyméthyl-2-aminopentane dioïque, acide éthylènediamine tétraacétique, acide diéthylènetriamine pentaacétique, éthylènediaminetetraacétates, nitrilotriacétates, N-(2 hydroxyéthyl)-nitrilodiacétates ),
      - sels d'acides alkyl C₅-C₂₀ succiniques
      - esters polyacétals carboxyliques
      - sels d'acides polyaspartiques ou polyglutamiques
      - acide citrique, acide adipique, acide gluconique ou acide tartrique ou leurs sels
   - des copolymères d'acide acrylique et d'anhydride maléïque ou des homopolymères d'acide acrylique, tels que le Rhodoline DP 226 35 de Rhodia et le Sokalan CP5 de BASF (à raison de 0 à 10 %, du poids total de ladite composition nettoyante) ;
   - des polyvinylstyrènes sulfonés ou leurs copolymères avec l'acide acrylique, méthacrylique ...
   (à raison de 0 à 10 %, du poids total de composition nettoyante);
◆des "builders" (adjuvants de détergence améliorant les propriétés de surface des tensioactifs) minéraux du type :
   - polyphosphates de métaux alcalins, d'ammonium ou d'alcanolamines tels que le RHODIAPHOS HD7 commercialisé par la société RHODIA, (à raison de 0 à 70 % du poids total de composition nettoyante) ;
   - pyrophosphates de métaux alcalins
   - silicates de métaux alcalins, de rapport SiO₂/M₂O pouvant aller de 1 à 4, de préférence de 1,5 à 3,5, tout particulièrement de 1,7 à 2,8 ; il peut s'agir de silicates amorphes ou de silicates lamellaires comme les phases ^{~}.^{~}. et de Na₂Si₂O₅, commercialisées sous les références NaSKS-5, NaSKS-7, NaSKS-11 et NaSKS-6 par CLARIANT ;
   - borates, carbonates, bicarbonates, sesquicarbonates alcalins ou alcalino-terreux (en quantité pouvant aller jusqu'à 50 % environ du poids total de ladite composition nettoyante);
   - cogranulés de silicates hydratés de métaux alcalins de rapport SiO₂/M₂O pouvant aller de 1,5 à 3,5, et de carbonates de métaux alcalins (sodium ou de potassium) ; on peut citer en particulier les cogranulés dans lesquels la teneur pondérale en eau associée au silicate par rapport au silicate sec est d'au moins 33/100, le rapport pondéral du silicate au carbonate pouvant aller de 5/95 à 45/55, de préférence de 15/85 à 35/65, tels que décrits dans EP-A-488 868 et

EP-A-561 656, comme le NABION 15 commercialisé par la société RHODIA ; (la quantité totale de "builders" pouvant représenter jusqu'à 90% du poids total de ladite composition nettoyante ou rinçante) ;
◆des agents de blanchiment du type perborates, percarbonates associés ou non à des activateurs de blanchiment acétylés comme la N, N, N', N'-tétraacétyl-éthylènediamine (TAED) ou des produits chlorés du type chloroisocyanurates, ou des produits chlorés du type hypochlorites de métaux alcalins, ou de l'eau oxygénée (à raison de 0 à 30 % du poids total de ladite composition nettoyante)
◆des charges du type sulfate de sodium, chlorure de sodium, carbonate de sodium ou de calcium, kaolin, silice, à raison de 0 à 50 % du poids total de ladite composition;
◆des catalyseurs de blanchiment contenant un métal de transition, les complexes de fer, manganèse et cobalt notamment, comme ceux du type [Mn^{IV}₂(-O)₃(Me₃TACN)₂](PF₆)₂, [Fe^{II}(MeN₄py)(MeCN)](ClO₄)₂, [(Co^{III})(NH₃)₅(OAc)](OAc)₂, décrits dans US-A-4,728,455 , 5,114,606, 5,280,117 , EP-A-909 809, US-A-5,559,261 , WO 96/23859, 96/23860 et 96/23861 (à raison de 0 à 5 % du poids total de ladite composition nettoyante)
◆des agents influant sur le pH de la composition, solubles dans le milieu nettoyant ou rinçant, notamment
   - des additifs alcalinisants phosphates de métaux alcalins, carbonates, perborates, hydroxydes de métaux alcalins) ou
   - des additifs acidifiants éventuellement nettoyants comme les acides minéraux (acide phosphoriques, polyphosphoriques, sulfamique, chlorhydrique, fluorhydrique, sulfurique, nitrique, chromique), les acides carboxyliques ou polycarboxyliques (acide acétique, hydroxyacétique, adipique, citrique, formique, fumarique, gluconique, glutarique, glycolique, malique, maléique, lactique, malonique, oxalique, succinique et tartrique) ou des sels d'acides comme le bisulfate de sodium, bicarbonates et sesquicarbonates de métaux alcalins.
◆des polymères utilisés pour contrôler la viscosité du mélange et/ou la stabilité des mousses formées à l'utilisation, comme les dérivés de cellulose ou de guar (carboxyméthylcellulose, hydroxyéthylcellulose, hydroxypropylguar, carboxy-méthylguar, carboxyméthylhydroxypropyl-guar...), la gomme xanthane, le succinoglycane (RHEOZAN^{®} commercialisé par RHODIA), la gomme caroube, les carragénanes (à raison de 0 à 2 % du poids total de ladite composition nettoyante)
◆des agents hydrotropes, comme les alcools courts en C₂-C₈, en particulier l'éthanol, les diols et glycols comme le diéthylène glycol, dipropylène-glycol, le xylène sulfonate de sodium, le naptalène sulfonate de sodium (à raison de 0 à 10g pour 100g de ladite composition nettoyante)
◆des agents hydratants ou humectants pour la peau comme le glycérol, l'urée ou des agents protecteurs de la peau, comme les protéines ou hydrolysats de protéines, les huiles végétales comme l'huile de soja, les polymères cationiques comme les dérivés cationiques du guar (JAGUAR C13S^{®}, JAGUAR C162^{®}, HICARE 1000^{®} commercialisés par la société RHODIA, (à raison de 0 à 40% du poids total de ladite composition nettoyante)
◆des biocides ou désinfectants comme
   - les biocides cationiques, par exemple
      * les sels de monoammonium quaternaire tels que
         - les chlorures de coco-alkyl benzyl diméthylammonium, de C₁₂-C₁₄ alkyl benzyl diméthylammonium, de coco-alkyl dichlorobenzyl diméthylammonium, de tetradecyl benzyl diméthylammonium, de didécyl diméthylammonium, de dioctyl diméthylammonium
         - les bromures de myristyl triméthylammonium, de cétyl triméthylammonium
      * les sels d'amines hétérocycliques monoquaternaires tels que les chlorures de laurylpyridinium, de cétylpyridinium, de C₁₂-C₁₄ alkyl benzyl imidazolium
      * les sels d'alkyl gras triphényl phosphonium comme le bromure de myristyl triphényl phosphonium
      * les biocides polymères, comme ceux dérivés de la réaction
         - de l'épichlorhydrine et de la diméthylamine ou de la diéthylamine
         - de l'épichlorhydrine et de l'imidazole
         - du 1,3-dichoro-2-propanol et de la diméthylamine
         - du 1,3-dichoro-2-propanol et du 1,3-bis-diméthylamino-2-propanol
         - du dichlorure d'éthylène et du 1,3-bis-diméthylamino-2-propanol
         - du bis (2-chloroéthyl)ether et de la N,N'-bis(diméthylaminopropyl) urée ou thiourée
         - les chlorhydrates de polymère de biguanidine, comme le VANTOCIL IB
   - les biocides amphotères comme les dérivés de N-(N'-C₈-C₁₈alkyl-3-aminopropyl)-glycine, de N-(N'-(N"-C₈-C₁₈alkyl-2-aminoéthyl)-2-aminoéthyl)-glycine, de N,N-bis(N'-C₈-C₁₈alkyl-2-aminoéthyl)-glycine, tels que le (dodécyl) (aminopropyl) glycine, le (dodécyl) (diéthylènediamine) glycine
   - les amines comme la N-(3-aminopropyl)-N-dodecyl-1,3-propanediamine
   - les biocides halogénés comme les iodophores et sels d'hypochlorites, tels que le dichloroisocyanurate de sodium
   - les biocides phénoliques comme le phénol, le résorcinol, les crésols, l'acide salicylique
   - les biocides hydrophobes comme
      - le parachlorométaxylenol, le dichlorométaxylenol
      - le 4-chloro-m-crésol
      - le résorcinol monoacétate
      - les mono- ou poly-alkyl ou aryl phénols, crésols ou résorcinols, comme l'o-phenyl-phénol, le p-tert-butyl-phénol, le 6-n-amyl-m-crésol,
      - les alkyl et/ou aryl chloro ou bromophénols, comme l'o-benzyl-p-chlorophénol
      - les diphényléthers halogénés, comme le 2',4,4'-trichloro-2-hydroxy-diphényl éther (triclosan), le 2,2'-dihydroxy-5,5'-dibromo-diphényl éther.
      - le chlorophénésine (éther p-chloro-phénylglycérique).
      à raison de 0 à 5% du poids total de ladite composition nettoyante.
◆des solvants avant une bonne activité nettoyante ou dégraissante, comme
   - les alkylbenzenes de type octyl benzene,
   - les oléfines ayant un point d'ébullition d'au moins 100°C, comme les alpha-olefines, preferentiellement le 1-decene or 1-dodecene
   - les éthers de glycol de formule générale, R1 O(R2O)mH où R1 est un groupe alkyle présentant de 3 à 8 carbones et chaque R2 est soit un ethylene ou propylene et m est un nombre qui varie de 1 à 3 ; on peut citer les monopropyleneglycol monopropyl ether, dipropyleneglycol monobutyl ether, monopropyleneglycol monobutyl ether, diethyleneglycol monohexyl ether, monoethyleneglycol monohexyl ether, monoethyleneglycol monobutyl ether et leurs mélanges.
   - les diols présentant de 6 à 16 atomes de carbone dans leur structure moléculaire ; les diols sont particulièrement intéressants car en plus de leur propriétés dégraissantes, ils peuvent aider à éliminer les sels de calcium (savons) ; les diols contenant de 8 à 12 atomes de carbone sont préférés, tout préférentiellement le 2,2,4-trimethyl-1,3-pentanediol.
   - d'autres solvants tels que l'huile de pin, les terpenes d'orange, l'alcool benzylique, le n-hexanol, les esters phatliques alcools possédant 1 à 4 atomes de carbone, le butoxy propanol, le Butyl Carbitol et le 1(2-n-butoxy-1-methylethoxy)propane-2-ol aussi appelé butoxy propoxy propanol ou dipropylene glycol monobutyl ether, le diglycol hexyl (Hexyl Carbitol), butyl triglycol, les diols comme le 2,2,4-trimethyl-1,3-pentanediol, et leurs mélanges.
   (à raison de 0 à 30% du poids total de ladite composition nettoyante)
◆ des nettoyants industriels comme les solutions de sels alcalins du type phosphates, carbonates, silicates ... de sodium, potassium, (à raison de 0 à 50% du poids total de ladite composition nettoyante)
◆ les solvants organiques hydrosolubles peu nettoyants comme le methanol, l'ethanol, l'isopropanol, l'ethylene glycol, le propylene glycol, et leur mélanges, (à raison de 0 à 40% du poids total de ladite composition nettoyante)
◆ des cosolvants comme la monoéthanolamide et/ou les béta-aminoalcanols, particulièrement intéressants dans les compositions de pH supérieur à 11, tout particulièrement supérieur à 11,7 , car ils aident à réduire la formation de films et de traces sur les surfaces dures (ils peuvent être mis en oeuvre à raison de 0,05 à 5% du poids de la composition nettoyante) ; des systèmes solvants comprenant de la monoéthanolamide et/ou des béta-aminoalcanols sont décrits dans US 5,108,660.
◆ des agents antimousses comme les savons notamment. Les savons sont des sels alcalins d'acides gras, notamment les sels de sodium, potassium, ammonium et d'alcanol ammonium d'acides gras supérieurs contenant environ de 8 à 24 atomes de carbone, et de préférence d'environ 10 à environ 20 atomes de carbone ; on peut notamment citer les sels de mono-, di- et triéthanolamine de sodium et de potassium ou de mélanges d'acides gras dérivés de l'huile de coprah et d'huile de noix broyée. La quantité de savon peut être d'au moins 0,005 % en poids, de préférence de 0,5 % à 2 % en poids par rapport au poids total de la composition. Des exemples supplémentaires de matériaux de régulation de la mousse sont les solvants organiques, la silice hydrophobe, l'huile de silicone et les hydrocarbures.
◆ des abrasifs, comme la silice, le carbonate de calcium
• des additifs divers tels que des enzymes, des parfums, des colorants, des agents inhibiteurs de corrosion des métaux, des conservateurs, des brillanteurs optiques, des agents opacifiants ou perlescents ...

Le pH de la composition selon l'invention ou le pH d'utilisation de ladite composition peut aller de 0,5 à 14, de préférence de 1 à 14.

Les compositions de type alcalin, de pH supérieur ou égal à 7,5, de préférence supérieur à 8,5 pour les applications ménagères (tout particulièrement de pH de 8,5 à 12, notamment de 8,5 à 11,5) sont particulièrement utiles pour l'enlèvement de salissures grasses et sont particulièrement bien adaptées au nettoyage de cuisine. Elles peuvent comprendre de 0,001 à 5%, de préférence de 0,005 à 2% de leur poids du copolymère selon l'invention.
Les compositions alcalines comprennent généralement, en plus du copolymère, au moins un additif choisi parmi
- un agent séquestrant ou antitartre (en quantité allant de 0 à 40%, de préférence de 1 à 40%, plus préférentiellement de 2 à 30% et tout particulièrement de 5 à 20% du poids de la composition)
- un biocide ou désinfectant cationique, notamment de type ammonium quaternaire, comme les chlorures de N-alkyl benzyl dimethyl ammonium, chlorure de N-alkyl dimethyl ethylbenzyl ammonium, halogénure de N-didecydimethylammonium, et chlorure de di- N-alkyl dimethyl ammonium (en quantité pouvant aller de 0 à 60%, de préférence de 0 à 40%, plus préférentiellement de 0 à 15% et tout particulièrement de 0 à 5% du poids de la composition)
- au moins un agent tensioactif non-ionique, amphotère, zwitterionique, ou anionique ou leur mélange ; lorsqu'un agent tensioactif cationique est présent, ladite composition comprend en outre préférentiellement un agent tensioactif amphotère et/ou non-ionique (la quantité totale d'agents tensioactifs peut aller de 0 à 80%, de préférence de 0 à 50% , tout particulièrement de 0 à 35% du poids de la composition)
- si nécessaire, un agent de régulation de pH, en une quantité permettant d'atteindre, éventuellement après dilution ou mise en solution de la composition, un pH d'utilisation allant de 7,5 à 13 ; l'agent de régulation de pH peut notamment être un système tampon comprenant de la monoethanolamine et/ou un beta-aminoalkanol et potentiellement mais préférentiellement des matériaux alcalins « co-tampon » du groupe de l'ammoniaque, des C2-C4 alkanolamines, des hydroxydes d'alcalins, silicates, borates, carbonates, bicarbonates et leur mélanges. Les cotampons préférés sont les hydroxydes alcalins.
- de 0,5 à 98%, de préférence de 25 à 95%, tout particulièrement de 45 à 90% en poids d'eau
- un solvant organique nettoyant ou dégraissant, en quantité pouvant représenter de 0 à 60%, de préférence de 1 à 45%, tout particulièrement de 2 à 15% du poids de ladite composition
- un co-solvant comme la monoethanolamine et/ou les beta-aminoalkanols, en quantité pouvant représenter de 0 à 10%, de préférence de 0,05 à 10%, tout particulièrement de 0,05 à 5% du poids de ladite composition
- un solvant organique hydrosoluble peu nettoyant, en quantité pouvant représenter de 0 à 25%, de préférence de 1 à 20 %, tout particulièrement de 2 à 15% du poids de ladite composition
- éventuellement un agent de blanchiment, un parfum ou d'autres additifs usuels.

Lesdites compositions alcalines peuvent se présenter sous la forme d'une formule prête à l'emploi ou bien d'une formule sèche ou concentrée à diluer dans l'eau notamment, avant emploi ; elles peuvent être diluées de 1 à 10 000 fois, de préférence de 1 à 1000 fois avant emploi.

Avantageusement, une formulation pour le nettoyage des cuisines, comprend :
- de 0,001 à 1 % en poids du copolymère selon l'invention
- de 1 à 10 % en poids de solvant hydrosoluble, l'isopropanol notamment
- de 1 à 5 % en poids de solvant nettoyant ou dégraissant, le butoxypropanol notamment
- de 0,1 à 2 % en poids de monoéthanolamine
- de 0 à 5 % en poids d'au moins un agent tensioactif non cationique, de préférence amphotère ou non-ionique,
- de 0 à 1 % en poids d'au moins un agent tensioactif cationique à propriété désinfectante (notamment mélange de n-alkyl dimethyl ethylbenzyl ammonium chloride et n-alkyl dimethyl benzyl ammonium chloride),
   la quantité totale d'agent(s) tensioactif(s) représentant de 1 à 50 % en poids
- de 0 à 2 % en poids d'un diacide carboxylique comme agent antitartre
- de 0 à 5 % d'un agent de blanchiment
- et de 70 à 98 % en poids d'eau.
Le pH d'une telle formulation est de préférence de 7,5 à 13, plus préférentiellement de 8 à 12.

Les compositions de type acide, de pH inférieur à 5, sont particulièrement utiles pour l'enlèvement de salissures de type minéral ; elles sont particulièrement bien adaptées au nettoyage de cuvettes de toilettes.
Elles peuvent comprendre de 0,001 à 5 %, de préférence de 0,01 à 2 % de leur poids du copolymère de l'invention.
Les compositions acides comprennent généralement, en plus du copolymère selon l'invention,
- un agent acide minéral ou organique (en quantité allant de 0,1 à 40%, de préférence de 0,5 à 20% et plus préférentiellement de 0,5 à 15% du poids de la composition)
- au moins un agent tensioactif non-ionique, amphotère, zwitterionique, ou anionique ou leur mélange ; (la quantité totale d'agents tensioactifs peut aller de 0,5 à 20%, de préférence de 0,5 à 10 % du poids de la composition)
- éventuellement un biocide ou désinfectant cationique, notamment de type ammonium quaternaire, comme les chlorures de N-alkyl benzyl dimethyl ammonium, chlorure de N-alkyl dimethyl ethylbenzyl ammonium, halogénure de N-didecydimethylammonium, et chlorure de di- N-alkyl dimethyl ammonium (en quantité pouvant aller de 0,01 à 2% de préférence de 0,1 à 1% du poids de la composition)
- éventuellement un agent épaississant (en quantité allant de 0,1 à 3%, du poids de la composition)
- éventuellement un agent de blanchiment (en quantité allant de 1 à 10%, du poids de la composition)
- de 0,5 à 99 %, de préférence de 50 à 98 % en poids d'eau
- un solvant, comme le glycol ou un alcool, (en quantité pouvant aller de 0 à 10% de préférence de 1 à 5% du poids de la composition)
- éventuellement un parfum, un conservateur, un abrasif ou d'autres additifs usuels.

Lesdites compositions acides se présentent de préférence sous la forme d'une formule prête à l'emploi.

Avantageusement, une formulation pour le nettoyage des cuvettes de toilettes, comprend :
- de 0,05 à 5%, de préférence de 0,01 à 2% en poids du copolymère selon l'invention
- une quantité d'agent acide nettoyant telle que le pH final de la composition soit de 0,5 à 4, de préférence de 1 à 4 ; cette quantité est généralement de 0,1 à environ 40 %, et de préférence entre 0,5 et environ 15 % en poids par rapport au poids de la composition ; l'agent acide peut être notamment un acide minéral tel que l'acide phosphorique, sulfamique, chlorhydrique, fluorhydrique, sulfurique, nitrique, chromique et des mélanges de ceux-ci ou un acide organique, notamment l'acide acétique, hydroxyacétique, adipique, citrique, formique, fumarique, gluconique, glutarique, glycolique, malique, maléique, lactique, malonique, oxalique, succinique et tartrique ainsi que des mélanges de ceux-ci, des sels d'acides tels que le bisulfate de sodium et des mélanges de ceux-ci ; la quantité préférée dépend du type du nettoyant acide utilisé : par exemple avec l'acide sulfamique, elle est comprise entre 0,2 et 10%, avec l'acide chlorhydrique entre 1 et 15 %, avec l'acide citrique entre 2 et 15 %, avec l'acide formique, entre 5 et 15 % et avec l'acide phosphorique, entre 2 et 30 % en poids.
- de 0,5 à 10% en poids d'au moins un agent tensioactif, de préférence anionique ou non-ionique
- éventuellement de 0,1 à 2 % en poids d'au moins un agent tensioactif cationique à propriété désinfectante (notamment mélange de n-alkyl dimethyl ethylbenzyl ammonium chloride et n-alkyl dimethyl benzyl ammonium chloride)
- éventuellement un agent épaississant (en quantité allant de 0,1 à 3%, du poids de composition), de type gomme, notamment une gomme xanthane ou un succinoglycane (Rheozan)
- éventuellement un agent de blanchiment (en quantité allant de 1 à 10%, du poids de composition)
- éventuellement un conservateur, un colorant, un parfum ou un abrasif
- et de 50 à 95 % en poids d'eau.

Ci-après sont explicités quelques autres modes particuliers de réalisation et d'application de la composition selon l'invention.

Ainsi, la composition selon l'invention peut être mise en oeuvre pour le traitement nettoyant facilité de surfaces en verre, notamment de vitres. Ce traitement peut être effectué par les diverses techniques connues. On peut citer en particulier les techniques de nettoyage de vitres par pulvérisation d'un jet d'eau à l'aide d'appareils de type Karcher®.
La quantité de copolymère selon l'invention introduite sera généralement telle que, lors de l'utilisation de la composition de nettoyage, après dilution éventuelle, la concentration en copolymère de l'invention soit comprise entre 0,001 g/l et 2 g/l, de préférence de 0,005 g/l et 0,5 g/l.

La composition de nettoyage des vitres selon l'invention comprend :
- de 0,001 à 10 %, de préférence 0,005 à 3 % en poids du copolymère selon l'invention;
- de 0,005 à 20 %, de préférence de 0,5 à 10 % en poids d'au moins un agent tensioactif non-ionique (par exemple un amine oxyde ou un alkyl polyglucoside) et/ou anionique ; et
- le reste étant formé d'eau et/ou d'additifs divers usuels dans le domaine.

Les formulations nettoyantes pour vitres comprenant ledit polymère peuvent également contenir :
- de 0 à 10%, avantageusement de 0,5 à 5 % de tensioactif amphotère,
- de 0 à 30 %, avantageusement de 0,5 à 15 % de solvant tels que des alcools, et
- le reste étant constitué par de l'eau et des additifs usuels (parfums notamment).
Le pH de la composition est avantageusement compris entre 6 et 11.

La composition selon l'invention est également intéressante pour le nettoyage facilité de la vaisselle en machine automatique. Ladite composition peut être soit une formule détergente (nettoyante) utilisée dans le cycle de lavage, soit une formule de rinçage. Les compositions détergentes pour lavage de la vaisselle dans des lave-vaisselle automatiques selon l'invention, comprennent avantageusement de 0,01 à 5 %, de préférence 0,1 à 3 % en poids du copolymère selon l'invention.

Lesdites compositions détergentes pour lave-vaisselle comprennent également au moins un agent tensioactif, de préférence non ionique en quantité pouvant aller de 0,2 à 10% de préférence de 0,5 à 5% du poids de ladite composition détergente, le reste étant constitué par des additifs divers et des charges, comme déjà mentionné ci-dessus. Ainsi elles peuvent en outre comprendre
- jusqu'à 90% en poids, d'au moins un adjuvant de détergence ("builder") de type silicate ou tripolyphosphate de sodium
- jusqu'à 10%, de préférence de 1 à 10%, tout particulièrement de 2 à 8% en poids, d'au moins un agent auxiliaire de nettoyage, un copolymère d'acide acrylique et d'acide méthyl propane sulfonique (AMPS) de préférence
- jusqu'à 30% en poids d'au moins un agent de blanchiment, de préférence perborate ou percarbonate, associé ou non à un activateur de blanchiment
- jusqu'à 50% en poids d'au moins une charge, de préférence sulfate de sodium ou chlorure de sodium
Le pH est avantageusement compris entre 8 et 13.

Les compositions pour le rinçage facilité de la vaisselle en lave-vaisselle automatique selon l'invention, peuvent comprendre avantageusement de 0,02 à 10 %, de préférence de 0,1 à 5 % en poids du copolymère de l'invention par rapport au poids total de la composition.
Lesdites compositions peuvent comprendre également de 0,1 à 20 %, de préférence 0,2 à 15 % en poids par rapport au poids total de ladite composition d'un agent tensioactif, de préférence non ionique.
Parmi les agents tensioactifs non ioniques préférés, on peut citer les agents tensioactifs de type alcoylphénols en C₆-C₁₂ polyoxyéthylénés, les alcools aliphatiques en C₈-C₂₂ polyoxyéthylénés et/ou polyoxypropylénés, les copolymères bloc oxyde d'éthylène - oxyde de propylène, les amides carboxyliques éventuellement polyoxyéthylénés ....
Lesdites compositions peuvent comprendre en outre de 0 à 10 %, de préférence de 0,5 à 5 % en poids par rapport au poids total de la composition d'un acide organique séquestrant du calcium, de préférence de l'acide citrique.
Elles peuvent également comprendre un agent auxiliaire de type copolymère d'acide acrylique et d'anhydride maléïque ou des homo-polymères d'acide acrylique à raison de 0 à 15 %, de préférence 0,5 à 10 % en poids par rapport au poids total de ladite composition.
Le pH est avantageusement compris entre 4 et 7.

Un autre mode de réalisation particulier de l'invention consiste en une composition de nettoyage externe facilité, notamment de la carrosserie, des véhicules motorisés (voitures, camions, autobus, trains, avions ...).
Dans ce cas également, il peut s'agir d'une composition de nettoyage proprement dit ou une composition de rinçage.
La composition nettoyante pour véhicules automobiles comprend avantageusement de 0,005 à 10 % en poids du copolymère selon l'invention, par rapport au poids total de ladite composition, ainsi que :
- des agents tensioactifs non ioniques (à raison de 0 à 30%, de préférence de 0,1 à 15 % de la formulation),
- des agents tensioactifs amphotères et/ou zwitterioniques (à raison de 0 à 30%, de préférence de 0,01 à 10 % de la formulation)
- des agents tensioactifs cationiques (à raison de 0 à 30%, de préférence de 0,05 à 15 % de la formulation);
- des agents tensioactifs anioniques (à raison de 0 à 30%, de préférence de 0,1 à 15 % de la formulation);
- des adjuvants de détergence ("builders") (à raison de 1 à 99%, de préférence de 40 à 98 % de la formulation);
- des agents hydrotropes
- des charges, des agents régulant le pH ...
La quantité minimum d'agent tensioactif présent dans de type de composition est de préférence d'au moins 0,5% de la formulation.
Le pH de la composition est avantageusement compris entre 8 et 13.

La composition selon l'invention est aussi particulièrement adaptée pour le nettoyage facilité de surfaces dures de type céramiques (carrelage, baignoires, lavabos, etc...), notamment pour salles de bain.
La formulation nettoyante comprend avantageusement de 0,02 à 5 % en poids du copolymère de l'invention, par rapport au poids total de ladite composition ainsi qu'au moins un agent tensioactif.
Comme agents tensioactifs, on préfère les agents tensioactifs non ioniques, notamment les composés produits par condensation de groupes oxyde d'alkylène de nature hydrophile avec un composé organique hydrophobe qui peut être de nature aliphatique ou alkyl-aromatique.
La longueur de la chaîne hydrophile ou du radical polyoxyalkylène condensée avec un groupe hydrophobe quelconque peut être facilement réglée pour obtenir un composé soluble dans l'eau ayant le degré souhaité d'équilibre hydrophile/hydrophobe (HLB).
La quantité d'agents tensioactifs non ioniques dans la composition selon l'invention peut être de 0 à 30 % en poids, de préférence de 0 à 20 % en poids.
Un tensioactif anionique peut éventuellement être présent en quantité de 0 à 30%, avantageusement 0 à 20% en poids.
Il est également possible mais non obligatoire d'ajouter des détergents amphotères, cationiques ou zwitterioniques.
La quantité totale de composés tensioactifs employée dans ce type de composition est généralement comprise entre 0,5 et 50 %, de préférence entre 1 et 30 % en poids, et plus particulièrement entre 2 et 20 % en poids par rapport au poids total de la composition.
Ladite composition de nettoyage peut également comprendre d'autres ingrédients minoritaires, comme :
- des adjuvants de détergence ("builders") tels que mentionnés précédemment (en quantité pouvant être comprise entre 0,1 et 25 % en poids par rapport au poids total de la composition)
- un agent de régulation de la mousse, tel que mentionné ci-dessus, notamment de type savon (en quantité généralement d'au moins 0,005 % en poids, de préférence de 0,5 % à 2 % en poids par rapport au poids total de la composition)
- des agents de régulation du pH, des colorants, des brillanteurs optiques, des agents de suspension des salissures, des enzymes détersives, des agents de blanchiment compatibles, des agents de régulation de la formation de gel, des stabilisateurs de congélation-décongélation, des bactéricides, des conservateurs, des solvants, des fongicides, des répulsifs pour insectes, des agents hydrotropes, des parfums et des opacifiants ou perlescents.
Le pH de la composition est avantageusement compris entre 2 et 12.

La composition selon l'invention convient également au rinçage facilité des parois des douches.
Les compositions aqueuses de rinçage des parois des douches comprennent de 0,02 % à 5 % en poids, avantageusement de 0,05 à 1 % du copolymère selon l'invention.
Les autres composants actifs principaux des compositions aqueuses de rinçage de douches selon la présente invention sont au moins un agent tensioactif présent en une quantité allant de 0,5 à 5 % en poids et éventuellement un agent chélatant de métaux tel que mentionné ci-dessus, présent en une quantité allant de 0,01 à 5 % en poids.
Les compositions aqueuses de rinçage pour douches contiennent avantageusement de l'eau avec éventuellement au moins un alcool inférieur en proportion majoritaire et des additifs en proportion minoritaire (entre environ 0,1 et environ 5 % en poids, plus avantageusement entre environ 0,5 % et environ 3 % en poids, et encore plus préférentiellement entre environ 1 % et environ 2 % en poids).
Certains agents tensioactifs utilisables dans ce type d'application sont décrits dans les brevets US 5,536,452 et 5,587,022.
Des tensioactifs préférés sont des esters gras polyéthoxylés, par exemple des mono-oléates de sorbitane polyéthoxylés et de l'huile de ricin polyéthoxylée. Des exemples particuliers de tels agents tensioactifs sont les produits de condensation de 20 moles d'oxyde d'éthylène et de mono-oléate de sorbitane (commercialisés par RHODIA Inc. sous la dénomination ALKAMULS PSMO-20® avec une HLB de 15,0) et de 30 ou 40 moles d'oxyde d'éthylène et d'huile de ricin (commercialisés par RHODIA Inc. sous la dénomination ALKAMULS EL-620 ® (HLB de 12,0) et EL-719® (HLB de 13,6) respectivement). Le degré d'éthoxylation est de préférence suffisant pour obtenir un tensioactif ayant une HLB supérieure à 13.

Le pH de la composition est avantageusement compris entre 7 et 11.

La composition selon l'invention peut également être mise en oeuvre pour le nettoyage facilité de plaques vitrocéramiques.
Avantageusement, les formulations pour le nettoyage de plaques vitrocéramiques de l'invention comprennent :
- 0,01 à 5 % en poids du copolymère selon l'invention;
- 0,1 à 1 % en poids d'un épaississant tel qu'une gomme xanthane ;
- 10 à 60 % en poids d'un agent abrasif tel que le carbonate de calcium ou la silice ;
- 0 à 7 % en poids d'un solvant tel que le butyldiglycol ;
- 1 à 10 % en poids d'un agent tensioactif non ionique ; et
- éventuellement des agents d'alcalinisation ou des séquestrants.
Le pH de la composition est avantageusement compris entre 7 et 12 .

Comme mentionné ci-dessus, la composition selon l'invention peut également être mise en oeuvre dans le domaine du nettoyage industriel, notamment pour le nettoyage facilité de réacteurs.
Avantageusement, lesdites compositions comprennent :
- de 0,02 à 5 % en poids du copolymère selon l'invention;
- de 1 à 50 % en poids de sels alcalins (phosphates, carbonates, silicates de sodium ou potassium);
- de 1 à 30 % en poids d'un mélange d'agents tensioactifs, notamment d'agents tensioactifs non-ioniques comme les alcools gras éthoxylés et les agents tensioactifs anioniques comme le lauryl benzène sulfonate ;
- de 0 à 30% en poids d'un solvant comme le diisobutyl ester.
Le pH d'une telle composition est généralement de 8 à 14 .

### Composition de nettoyage de la vaisselle

La composition selon l'invention peut notamment être une composition de nettoyage de la vaisselle, automatique ou à la main. De telles compositions sont connues. Les compositions peuvent notamment comprendre au moins un tensioactif. Les compostions pour le nettoyage de la vaisselle automatique comprenne généralement en plus un agent adjuvant de détergence ("builder" en anglais).

La composition de nettoyage de la vaisselle peut notamment comprendre de 0,01% à 5%, de préférence de 0,05 à 3%, de préférence de 0,2% à 1,5%, en poids, du copolymère de l'invention.

La composition de nettoyage de la vaisselle peut se présenter sous forme quelconque, notamment sous forme liquide aqueuse ou non-aqueuse, concentrée de préférence, sous forme solide ou sous forme de gel.

La composition de nettoyage de la vaisselle peut être susceptible de mousser en milieu aqueux. Elle comprend de préférence au moins un agent tensioactif. Des agents tensioactifs pouvant être utilisés ont été mentionnés plus haut. L'agent tensioactif peut notamment être choisi parmi les agents tensioactifs anioniques, les agents tensioactifs non-ioniques, les agents tensioactifs amphotères ou zwitterioniques, les agents tensioactifs cationiques ou leurs mélanges.

La quantité d'agent tensioactif, exprimée en sec, peut représenter de 0,1 à 99 %, de préférence de 0,5 à 60 % de la masse totale de composition.

Lorsque la composition de nettoyage de la vaisselle est un solide de type pain de savon, la quantité d'agent tensioactif, exprimée en sec, peut représenter jusqu'à 99%, de préférence jusqu'à 95% de la masse totale de composition; cette quantité représente habituellement au moins 50% de la masse totale de composition. Les solides de type pain de savon peuvent en outre contenir de l'eau et/ou un solvant compatible à l'eau, en quantité pouvant allerjusqu'à 20% de la masse dudit solide.

On entend par masse totale de composition, la masse de l'ensemble de la composition incluant, outre le copolymère de l'invention et éventuellement de l'agent tensioactif (S), les autres constituants éventuels (eau, solvants, additifs autres).

Les compositions pour le nettoyage de la vaisselle à la main peuvent en outre comprendre des additifs de modification de la mousse, notamment de agents améliorant le toucher, la densité, et/ou la blancheur de la mousse, des agents augmentant la durée de vie de la mousse et/ou augmentant la quantité de mousse. Dans certains cas on parle d'agents de tonification de la mousse ("foam enhancers" ou "foam boosters" en anglais). Il peut par exemple s'agir d'alcools aliphatiques (AA), de préférence linéaires" par exemple en C₈-C₂₂, de préférence en C₁₂-C₁₈, plus particulièrement en C₁₂-C₁₆, ou leurs mélanges, qui sont décrit dans le document WO 2006/035154. Il peut aussi s'agir de (co)polymères, par exemple décrits dans les documents WO 00/71651, WO 00/71591, WO 02/026844, US 6656900, EP1180061, WO 99/27058, WO 99/27054, WO 99/27053, WO 99/27057, WO 00/71660, WO 00/71659, WO 00/71241, WO 00/71652, WO 00/71658.

De préférence, la composition de nettoyage de la vaisselle comprend en outre de l'eau et/ou au moins un solvant compatible à l'eau. On entend par solvant compatible à l'eau, tout solvant qui en mélange avec l'eau forme, à température ambiante, une seule phase, transparente. L'eau et/ou le solvant peuvent représenter jusqu'à 99,5 % de la masse totale de ladite composition ; la quantité minimum d'eau et/ou solvant compatible à l'eau est habituellement de 1%. Lorsqu'il s'agit d'un mélange eau/solvant, ledit solvant peut représenter jusqu'à 80% du poids dudit mélange. Ledit solvant est de préférence choisi parmi les mono ou polyalcools aliphatiques en C₂-C₈, et leurs éthers. Comme exemples de solvant, on peut mentionner notamment l'éthanol, le propanol, l'isopropanol, le butanol, le 2-buthoxyéthanol, le diéthylène glycol, le 1-butoxyéthanol-2-propanol, le diéthylène monobutyl éther.

Ladite composition de nettoyage de la vaisselle, notamment lorsqu'il s'agit d'une composition liquide concentrée, peut en outre comprendre au moins un polymère pour contrôler la viscosité et/ou la stabilité des mousses, comme les acides polyacryliques ou leurs sels hydrosolubles présentant une masse moléculaire en poids de 1000 à 5 000 000 g/mol, les copolymères blocs oxyde d'éthylène-oxyde de propylène de masse moléculaire en poids jusqu'à 30 000 g/mol, les polyéthylène glycols ayant une masse moléculaire d'au moins 400 g/mol, les biopolymères ayant une masse moléculaire d'au moins 10 000 g/mol ; lorsqu'il est présent, ledit polymère peut représenter de 0,01 à 10 % de la masse en sec de la composition liquide concentrée.

On entend par composition concentrée, toute composition susceptible d'être diluée en cours d'utilisation.

Comme exemple de polymères susceptibles de contrôler la viscosité et/ou la stabilité des mousses, on peut mentionner
- les acides polyacryliques ou leurs sels comme les CARBOPOL de B.F. Goodrich, notamment les CARBOPOL 941, CARBOPOL 801, CARBOPOL 907, CARBOPOL 910, CARBOPOL 934 , CARBOPOL 940
- les copolymères blocs oxyde d'éthylène-oxyde de propylène, comme les ANTAROX de Rhodia, notamment l'ANTAROX F-88
- les biopolymères comme les gommes guar, arabique, xanthane, rhéozan, welan, les carragenanes, les dérivés de cellulose ou de guar (carboxyméthylcellulose, hydroxyéthylcellulose, hydroxypropylguar, carboxy-méthylguar, carboxyméthylhydroxypropyl-guar)

Peuvent également être présents des agents de blanchiment, des adjuvants de détergence (« builders »), des agents hydrotropes, des agents hydratants, des parfums, des biocides, des conservateurs et autres additifs usuels, selon la destination de la composition.

On peut mentionner notamment, en ce qui concerne les compositions pour le lavage de la vaisselle à la main :
- des polymères cationiques synthétiques comme le MIRAPOL A550^{®}, le MIRAPOL A15^{®} commercialisés par RHODIA, le MERQUAT 550^{®} commercialisé par CALGON.
- des agents hydrotropes, comme les alcools courts en C₂-C₈, en particulier l'éthanol, les diols et glycols comme le diéthylène glycol, dipropylène-glycol,
- des agents hydratants ou humectants pour la peau comme le glycérol, l'urée ou des agents protecteurs de la peau, comme les protéines ou hydrolysats de protéines, les polymères cationiques comme les dérivés cationiques du guar (JAGUAR C13S^{®}, JAGUAR C162^{®}, HICARE 1000^{®} commercialisés par la société RHODIA.

On note que les compositions peuvent être diluées au moment de leur utilisation, celles-ci peuvent être diluées de 10 à 50 000 fois leur volume selon leur destination. Leur concentration en agent tensioactif, après dilution, peut généralement atteindre de 0,0001 à 10%, de préférence de 0,001 à 5%, tout particulièrement de 0,005 à 2%.

### Utilisation de la composition de nettoyage de la vaisselle - séchage

La composition de nettoyage de la vaisselle peut être utilisée de manière usuelle. Dans le cadre d'un processus de nettoyage de la vaisselle à la main, on peut par exemple opérer selon un processus comprenant les étapes suivantes:
Etape a) éventuellement diluer la composition dans de l'eau
Etape b) mettre en présence l'objet de vaisselle à nettoyer et la composition éventuellement diluée, le cas échéant à l'aide d'un moyen d'application,
Etape c) généralement frotter la vaisselle à l'aide d'un moyen de frottement,
Etape d) éventuellement rincer la vaisselle
Etape e) sécher.

Les processus de nettoyage de la vaisselle peuvent varier selon les individus. L'étape a) peut correspondre à la constitution d'un bain de vaisselle. Le taux de dilution peut typiquement être de 100 à 2000. On parle parfois d'un processus d"'évier plein" ("full sink" en anglais). Dans un tel mode de réalisation la concentration en copolymère de l'invention peut notamment être de 0,00025% à 0,01%, de préférence 0,0001 à 0,005%. Le taux de dilution peut être adapté à cet effet. Notamment il peut être prescrit par tout moyen de communication lié au produit, par exemple sur l'étiquette, dans une publicité, via un service consommateurs, un site internet. Une certaine dilution peut être opérée lors de l'application de la composition sur un moyen d'application et/ou de frottement approprié comprenant de l'eau comme une éponge imbibée d'eau ou d'une composition aqueuse, ou un tampon non tissé. Dans un tel mode de réalisation la concentration en copolymère de l'invention (après dilution) peut notamment être de 1 à 100.

L'étape b) peut notamment être opérée par trempe de l'objet de vaisselle dans un bain de vaisselle. Selon un autre mode la composition est appliquée directement sur l'objet de vaisselle, par exemple par pression sur un récipient souple ou semi-souple comprenant la composition ou à l'aide d'une pompe, ou par simple gravité. Selon un autre mode, la composition est appliquée sur un moyen d'application comme une éponge, un tampon, une brosse ou les doigts de la personne opérant la vaisselle, éventuellement protégés par des gants, puis le moyen d'application est mis au contact de l'objet de vaisselle. Pour ces deux derniers modes, on parle souvent d'un processus par application directe. On note qu'une certaine dilution peut alors survenir, l'étape a) et l'étape b) étant alors simultanées et/ou confondues.

Le processus de type application directe peut être préféré et procurer une amélioration du séchage plus significative. Notamment il peut être prescrit par tout moyen de communication lié au produit, par exemple sur l'étiquette, dans une publicité, via un service consommateurs, un site internet.

L'étape c) de frottement peut notamment être opérée de manière classique, par des mouvements circulaires et/ou des mouvements de va-et-vient du moyen de frottement sur d'objet de vaisselle. Le moyen de frottement peut être par exemple une éponge, un tampon, une brosse ou les doigts de la personne opérant la vaisselle, éventuellement protégés par des gants. Il peut en outre d'agir du moyen d'application de l'étape b). On peut opérer la mise en contact tout en frottant, l'étape b) et l'étape c) sont alors confondues.

L'étape d) est généralement recommandée. Elle peut être opérée de manière classique, par exemple par trempe dans de l'eau propre (l'objet de vaisselle est ensuite sorti), ou par passage sous un jet d'eau.

L'étape e) peut être opérée de manière classique. Lors de cette étape, on laissera simplement la vaisselle sécher, le cas échéant sur un égouttoir ou un torchon ou tout autre dispositif favorisant l'évacuation et/ou l'absorption d'eau.

D'autres détails ou avantages de l'invention pourront apparaitre au vu des exemples qui suivent, sans caractère limitatif.

### Exemple 1 - Préparation d'un copolymère VP/DADMAC 90 mol% / 10 mol%

Dans un réacteur verré ayant une double enveloppe de 1litre équipé d'une agitation mécanique, d'un réfrigérant et d'une régulation de température par un cryothermostat sont ajoutés 233g d'eau. Sous balayage d'azote la température du milieu réactionnel est portée à 75°C. A 75°C sont alors ajoutés 76mg de dichlorure de 2,2'-azobis(2-methylpropionamidine) puis simultanément 38,5g de DADMAC à 65% dans l'eau sur 3h, 310g de n-vinylpyrrolidone à 50% dans l'eau sur 4h et 0,68g de dichlorure de 2,2'-azobis(2-methylpropionamidine) dans 20g d'eau sur 5h. A la fin des ajouts la température est baissée à 65°C. A 65°C sont ajoutés 1,26g de dihydrochlorure de 2,2'-azobis(2-methylpropionamidine) à 25% dans l'eau. La température est maintenue à 65°C pendant 5h. Le milieu réactionnel est ensuite refroidi à température ambiante.

### Exemple 2 - Utilisation du copolymère dans un liguide pour la vaisselle à la main et évaluation de la vitesse de séchage

### Protocole d'évaluation

Objectif: Estimer la qualité de séchage d'un verre de cuisine qui sort d'une bassine d'eau de rinçage.

Principe: Un verre de cuisine est lavé à la main à l'aide de la formulation à évaluer, rincé et trempé dans une bassine d'eau, à 40°C. Dans le but de faciliter la visualisation des traces d'eau rémanentes après séchage total du verre, on effectue ce trempage dans de l'eau à très grande dureté. Par commodité, nous utilisons de l'eau minérale commerciale de marque Contrex®.

Le verre chargé d'eau, à la sortie de la bassine, est déposé sur un support, placé sur une balance.

On enregistre la masse du verre pendant que l'eau s'écoule pour obtenir la masse d'eau restant sur le verre en fonction du temps, et donc le profil de séchage dudit verre.

Dispositif: Une tige-support métallique (2), dont l'extrémité haute est légèrement biseautée, est placée sur la balance (4).

Un grand entonnoir (3), retourné, couvre la balance sans toucher le plateau. La tige passe à travers le tube de l'entonnoir.

Le verre de cuisine (1) sera posé à l'envers sur l'extrémité de la tige-support.

Le seul point de contact se fait sur le fond du verre, à l'intérieur. L'extrémité étant biseautée, le verre penche de façon à faciliter l'écoulement de l'eau en un point. L'eau s'écoule sur l'entonnoir. La balance mesure la perte de masse du verre.

L'acquisition des mesures se fait de manière automatique (connexion de la balance sur un ordinateur par un port RS232), par une routine Microsoft® Excel. On effectue en général un relevé par seconde, sur une durée voisine de 200 secondes.

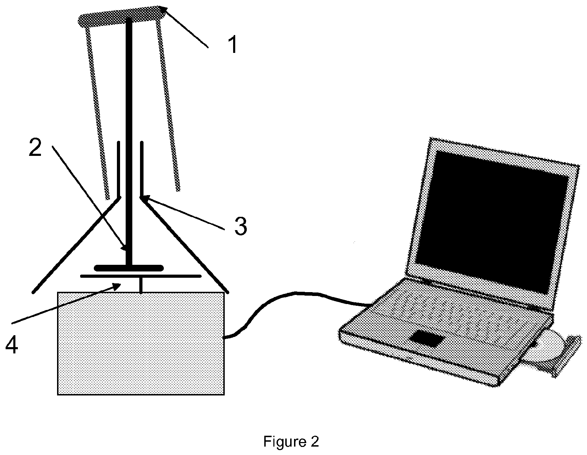

La figure 2 présente un schéma du dispositif.

### Mode opératoire:

Mettre des gants de laboratoire.

Prendre un verre neuf.

Tarer la balance.

Placer le verre sur la tige-support.

Déterminer sa masse : « verre sec ».

Mettre 3 litres de l'eau Contrex® à chauffer en bain thermostaté (40°C).

Découper un morceau d'éponge (côtés de 4cm environ)

Faire couler l'eau du robinet à 40°C.

Mouiller l'éponge puis l'essorer.

Déposer la formulation à évaluer dessus (1 ml).

Presser l'éponge plusieurs fois dans la main afin de faire mousser abondamment.

Frotter le verre sur toutes les faces avec l'éponge pleine de mousse.

Rincer à l'eau chaude (40°C). Bien rincer les gants.

Plonger dans l'eau Contrex® à 40°C.

Tarer la balance.

Déclencher l'acquisition et sortir le verre du bain thermostaté pour le placer sur la tige, simultanément.

Les bords du verre ne doivent pas toucher l'entonnoir afin de ne pas fausser la pesée. A 180 secondes:
Arrêter l'acquisition.
Essuyer l'eau sur le fond et les bords du verre.
Tarer la balance sans le verre.
Mesurer la « masse finale » du verre.

### Exploitation des résultats:

Il faut soustraire, des mesures de masses enregistrées, la masse du verre sec et la masse d'eau essuyée (masse à 180s - masse finale). En effet, l'eau restant sur le dessus du verre n'a pas eu l'occasion de s'écouler en raison de la quasi-horizontalité de cette surface, et l'eau restant sur le bord inférieur du verre se serait écoulée si le verre avait été posé à plat sur une surface habituellement utilisée (égouttoir, torchon...). Nous évaluons donc la quantité d'eau résiduelle sur les parois verticales du verre. On obtient une courbe de la perte d'eau en fonction du temps.

### Exemple 2.1 (comparatif): lavage du verre avec une formulation commerciale: Palmolive®

Un verre à boisson est lavé selon le protocole décrit précédemment avec une formulation commerciale de lavage de vaisselle: Palmolive®, commercialisée en France par la société Colgate-Palmolive.
On constate visuellement au cours de l'expérience que le verre reste couvert durant plus de 150 secondes d'un film homogène d'eau qui ne semble disparaître qu'avec l'évaporation de l'eau résiduelle.
On relève la masse d'eau restant sur le verre en fonction du temps en selon le protocole ci-dessus.

On obtient le profil de séchage suivant:

| temps (s) | masse (g) |
|---|---|
| 10 | 1,517 |
| 20 | 0,957 |
| 30 | 0,799 |
| 40 | 0,616 |
| 50 | 0,564 |
| 60 | 0,514 |
| 70 | 0,482 |
| 80 | 0,445 |
| 90 | 0,429 |
| 100 | 0,409 |
| 110 | 0,393 |
| 120 | 0,387 |
| 130 | 0,375 |
| 140 | 0,24 |
| 150 | 0,232 |
| 160 | 0,229 |
| 170 | 0,218 |

On constate qu'après 170 secondes, il reste 0,218g d'eau sur le verre. Cette eau est répartie sur la surface de façon assez homogène, sous la forme d'un film très fin. Après séchage total du verre par évaporation de l'eau résiduelle, on constate en observant ce verre au travers d'une lumière directe (lumière solaire ou d'une lampe) la présence d'un film de calcaire couvrant une grande partie de la surface. Ce dépôt provient de l'évaporation de l'eau de Contrex®, eau dont la dureté est voisine de 156°TH.

### Exemple 2.2: lavage du verre avec une formulation comprenant le copolymère de l'invention

On prépare une formulation de liquide vaisselle de la manière suivante:
On ajoute à 100g de la formulation commerciale Palmolive® 0,5g (en poids de polymère sec) du copolymère de l'exemple 1.
On répète alors l'expérience menée dans l'exemple 2.1 et on obtient le profil de séchage suivant :

| temps (s) | masse (g) |
|---|---|
| 10 | 1,5355 |
| 20 | 0,859 |
| 30 | 0,52 |
| 40 | 0,1875 |
| 50 | 0,055 |
| 60 | 0,047 |
| 70 | 0,0405 |
| 80 | 0,036 |
| 90 | 0,031 |
| 100 | 0,03 |
| 110 | 0,0255 |
| 120 | 0,0225 |
| 130 | 0,0205 |
| 140 | 0,0185 |
| 150 | 0,015 |
| 160 | 0,0125 |
| 170 | 0,011 |

On constate qu'après une phase initiale d'environs 20s durant laquelle les masses d'eaux résiduelles sur le verre sont comparables avec et sans polymère, la masse d'eau restant sur le verre modifié par le copolymère devient significativement plus faible que sur le verre non modifié. On observe un démouillage progressif et homogène du film d'eau sur la surface du verre. Ce processus commence par le haut du verre et descend pour finalement se propager lentement vers le bas du verre, sans laisser un nombre significatif de gouttes sur la surface.
Après 40 secondes, un verre lavé avec la formulation contenant le polymère porte déjà moins d'eau résiduelle que le verre lavé sans polymère (exemple 2.1) n'en porte en fin d'expérience, après 170 secondes.
En fin d'expérience, l'eau restant sur le verre lavé en présence de polymère représente une quantité totalement négligeable, 11mg. Ce verre est donc quasiment sec. Après un séchage complet du verre on constate en observant ce verre au travers d'une lumière directe (lumière solaire ou d'une lampe) une remarquable transparence, l'absence de film de calcaire à l'exception de quelques spots résiduels.

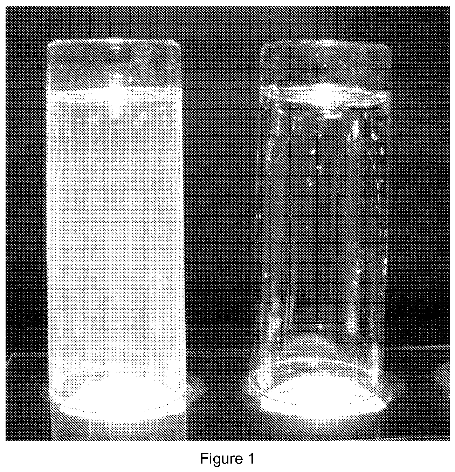

La figure 1 présente une photographie avec:
- à gauche un verre obtenu après lavage et séchage selon l'exemple 2.1 (comparatif)
- à droite un verre obtenu après lavage et séchage selon l'exemple 2.2 conforme à l'invention.
On voit que la photo de gauche (comparatif) présente de nombreuses traces de séchage superposées à un film blanc très visibles, contrairement à la photo de droite.

### Exemple 3 - Utilisation du copolymère dans une lessive pour le nettoyage du linge et évaluation de la résistance au transfert des couleurs

On opère un lavage d'une charge de linge comprenant des tissus donneurs de colorant et des tissus accepteurs de colorants, avec une lessive de référence (lessive 1, comparative) et avec une lessive selon l'invention.
Lessive 1: Lessive commerciale en France en 2008, Xtra Fraicheur muguet
Lessive 2: Lessive 1 à laquelle on ajoute 1% en poids de matière active du copolymère de l'exemple 1.
   - Appareil de lavage: Launderometer - pots de 500 ml en inox
   - Conditions de lavage: Eau 100 ml, dureté 20±2°F, Température 60°C
   - Tissus donneurs de colorant
      - Noir direct 22 sur coton
      - Orange direct 39 sur coton
      - Rouge direct 83,1 sur cotton
      - Bleu acide 113 sur polyamide
   - Tissus accepteurs de colorants: Echantillon de 4 cm x 12 cm de tissus normalisés en coton ou en polyamide
   - Déroulement des essais
      Les solutions eau + lessive (100 ml d'eau + 8,3 g/l de lessive) sont préchauffées à 40°C. Dans chaque pot on place un donneur (0,3g) et un accepteur de colorants , sans addition de billes en aciers. On ajoute la solution préchauffée (100 ml). On met en route l'appareil. On lave pendant 20 minutes après atteinte de la température de 60°C. On rince alors les échantillons et on les sèche sur fil à température ambiante.
   - Evaluations: on mesure les écarts colorimétriques (Système CIELAB) selon la norme NF X 08-014 à l'aide du photocolorimètre Elrepho 3000 de Datacolor. Les écarts colorimétriques sont traduits en cotations selon l'échelle de gris.

**Résultats**

| | | Lessive 1 (comparative) | Lessive 2 |
|---|---|---|---|
| Sans UV | | | |
| Accepteur coton | Noir Direct 22 | 11,9 | 7,3 |
| | Orange Direct 39 | 32,2 | 26,5 |
| | Rouge Direct 83,1 | 17,7 | 12,5 |
| Accepteur polyamide | Bleu Acide 113 | 21,3 | 16,8 |
| | Moyenne | 20,8 | 15,8 |
| | | | |

| Avec UV | | | |
|---|---|---|---|
| Accepteur coton | Noir Direct 22 | 13,9 | 10,6 |
| | Orange Direct 39 | 31,4 | 25,3 |
| | Rouge Direct 83,1 | 23,1 | 18,6 |
| Accepteur polyamide | Bleu Acide 113 | 24,4 | 20,5 |
| | Moyenne | 23,2 | 18,7 |

Les écarts colorimétriques (représentatifs du transfert de colorant) sont moins élevés avec la lessive 2. Ceci montre que le copolymère a un effet de prévention de transfert des couleurs.

## Revendications

1. Utilisation d'un copolymère comprenant des unités cationiques A, et d'autres unités B, **caractérisé en ce que**:
- les unités A sont des unités dérivant de chlorure de N,N-diméthyldiallylammonium, et
- les unités B sont des unités dérivant d'un vinyl-lactame,
dans une composition de nettoyage ou rinçage de linge ou de nettoyage de surface dure.

2. Utilisation selon la revendication précédente, **caractérisée en ce que** le copolymère est un copolymère statistique linéaire.

3. Utilisation selon l'une des revendications précédentes, **caractérisée en ce que** les unités A et B représentent de 1% à 100%, de préférence de 50 à 100%, en moles des unités du copolymère.

4. Utilisation selon l'une des revendications précédentes, **caractérisée en ce que** le copolymère comprend:
- de 1 à 25% en moles des unités A, de préférence de 3 à 13%, et
- de 75 à 99% en moles des unités B, de préférence de 87 à 97%.

5. Utilisation selon l'une des revendications précédentes, **caractérisée en ce que** le rapport molaire entre les unités A et les unités B est compris entre 1/99 et 25/75, de préférence entre 5/95 et 15/85.

6. Utilisation selon l'une des revendications précédentes, **caractérisée en ce que** le copolymère comprend en plus:
- des unités C_{N} non ioniques, hydrophiles ou hydrophobes, et/ou
- des unités C_{A} anioniques ou potentiellement anioniques, et/ou
- des unités C_{C} cationiques ou potentiellement cationiques, différentes des unités A, et/ou
- des unités C_{Z} zwitterioniques.

7. Utilisation selon l'une des revendications 1 à 5, **caractérisée en ce que**:
- le copolymère est substantiellement dénué d'unités zwitterioniques, et
- le copolymère est substantiellement dénué d'unités anioniques ou potentiellement anioniques.

8. Utilisation selon l'une des revendications précédentes, **caractérisée en ce que** le vinyl-lactame est la vinyl-pyrrolidone.

9. Utilisation selon l'une des revendications précédentes, **caractérisée en ce que** les unités A dérivent de chlorure de N,N-diméthyldiallylammonium (DADMAC) et les unités B dérivent de vinyl-pyrrolidone.

10. Utilisation selon l'une des revendications précédentes, **caractérisée en ce que** ladite composition comprend au moins un tensioactif.

11. Utilisation selon l'une des revendications précédentes, **caractérisée en ce que** ladite composition comprend au moins un vecteur liquide, de préférence un vecteur aqueux, alcoolique ou hydro-alcoolique.

12. Utilisation selon l'une des revendications précédentes, **caractérisée en ce que** le nettoyage de surface dure est un nettoyage de la vaisselle, automatique ou à la main.

13. Utilisation selon l'une des revendications précédentes, **caractérisée en ce que** le copolymère est utilisé comme agent favorisant un démouillage lent et/ou un séchage rapide et/ou sans trace.

14. Utilisation selon l'une des revendications précédentes, **caractérisée en ce que** la surface est un textile, le traitement étant un nettoyage ou un rinçage de linge, le copolymère étant utilisé comme agent de protection de la couleur du linge et/ou comme agent de prévention du transfert des couleurs.

15. Procédé de nettoyage ou rinçage de linge ou de nettoyage de surface dure, comprenant une étape d'application sur le linge ou la surface dure d'une composition telle que définie dans l'une des revendications 1 à 11, ladite composition étant éventuellement diluée dans de l'eau au préalable.

## Patentansprüche

1. Verwendung eines Copolymers, das kationische Einheiten A und andere Einheiten B umfasst, **dadurch gekennzeichnet, dass**:
- es sich bei den Einheiten A um Einheiten, die sich von N,N-Dimethyldiallylammoniumchlorid ableiten, handelt und
- es sich bei den Einheiten B um Einheiten, die sich von einem Vinyllactam ableiten, handelt,
in einer Zusammensetzung zum Reinigen oder Spülen von Wäsche oder zum Reinigen einer harten Oberfläche.

2. Verwendung nach dem vorhergehenden Anspruch, **dadurch gekennzeichnet, dass** es sich bei dem Copolymer um ein lineares statistisch aufgebautes Copolymer handelt.

3. Verwendung nach einem der vorhergehenden Ansprüche, **dadurch gekennzeichnet, dass** die Einheiten A und B 1 bis 100 Mol- %, vorzugsweise 50 bis 100 Mol-%, der Einheiten des Copolymers ausmachen.

4. Verwendung nach einem der vorhergehenden Ansprüche, **dadurch gekennzeichnet, dass** das Copolymer :
- 1 bis 25 Mol- % Einheiten A, vorzugsweise 3 bis 13 %, und
- 75 bis 99 Mol- % Einheiten B, vorzugsweise 87 bis 97 %,
umfasst.

5. Verwendung nach einem der vorhergehenden Ansprüche, **dadurch gekennzeichnet, dass** das Molverhältnis zwischen den Einheiten A und den Einheiten B zwischen 1/99 und 25/75, vorzugsweise zwischen 5/95 und 15/85, liegt.

6. Verwendung nach einem der vorhergehenden Ansprüche, **dadurch gekennzeichnet, dass** das Copolymer außerdem :
- hydrophile oder hydrophobe nichtionische Einheiten C_{N} und/oder
- anionische oder potentiell anionische Einheiten C_{A} und/oder
- kationische oder potentiell kationische Einheiten C_{c}, die von den Einheiten A verschieden sind, und/oder
- zwitterionische Einheiten C_{Z}
umfasst.

7. Verwendung nach einem der Ansprüche 1 bis 5, **dadurch gekennzeichnet, dass**:
- das Copolymer weitgehend frei von zwitterionischen Einheiten ist und
- das Copolymer weitgehend frei von anionischen oder potentiell anionischen Einheiten ist.

8. Verwendung nach einem der vorhergehenden Ansprüche, **dadurch gekennzeichnet, dass** es sich bei dem Vinyllactam um Vinylpyrrolidon handelt.

9. Verwendung nach einem der vorhergehenden Ansprüche, **dadurch gekennzeichnet, dass** sich die Einheiten A von N,N-Dimethyldiallylammoniumchlorid (DADMAC) ableiten und sich die Einheiten B von Vinylpyrrolidon ableiten.

10. Verwendung nach einem der vorhergehenden Ansprüche, **dadurch gekennzeichnet, dass** die Zusammensetzung mindestens ein Tensid umfasst.

11. Verwendung nach einem der vorhergehenden Ansprüche, **dadurch gekennzeichnet, dass** die Zusammensetzung mindestens einen flüssigen Träger, vorzugsweise einen wässrigen, alkoholischen oder wässrig-alkoholischen Träger, umfasst.

12. Verwendung nach einem der vorhergehenden Ansprüche, **dadurch gekennzeichnet, dass** es sich bei der Reinigung einer harten Oberfläche um eine automatische oder manuelle Reinigung von Geschirr handelt.

13. Verwendung nach einem der vorhergehenden Ansprüche, **dadurch gekennzeichnet, dass** das Copolymer als Mittel zur Förderung einer langsamen Entnetzung und/oder einer schnellen und/oder spurenfreien Trocknung verwendet wird.

14. Verwendung nach einem der vorhergehenden Ansprüche, **dadurch gekennzeichnet, dass** es sich bei der Oberfläche um eine Textilie handelt, wobei es sich bei der Behandlung um eine Reinigung oder Spülung von Wäsche handelt, wobei das Copolymer als Mittel zum Schützen der Farbe der Wäsche und/oder als Mittel zur Verhinderung von Farbübertragung verwendet wird.

15. Verfahren zum Reinigen oder Spülen von Wäsche oder zum Reinigen einer harten Oberfläche mit einem Schritt des Aufbringens einer Zusammensetzung gemäß einem der Ansprüche 1 bis 11 auf die Wäsche oder die harte Oberfläche, wobei die Zusammensetzung gegebenenfalls vorher in Wasser verdünnt wird.

## Claims

1. Use of a copolymer comprising cationic units A and other units B, **characterized in that** :
- the units A are units deriving from N,N-dimethyldiallylammonium chloride, and
- the units B are units deriving from a vinyllactam,
in a composition for cleaning or rinsing laundry or for cleaning a hard surface.

2. Use according to the preceding claim, **characterized in that** the copolymer is a linear random copolymer.

3. Use according to either of the preceding claims, **characterized in that** the units A and B represent from 1 to 100 mol%, preferably from 50 to 100 mol%, of the units of the copolymer.

4. Use according to one of the preceding claims, **characterized in that** the copolymer comprises :
- from 1 to 25 mol% of units A, preferably from 3 to 13 mol%, and
- from 75 to 99 mol% of units B, preferably from 87 to 97 mol%.

5. Use according to one of the preceding claims, **characterized in that** the molar ratio of the units A to the units B is between 1/99 and 25/75, preferably between 5/95 and 15/85.

6. Use according to one of the preceding claims, **characterized in that** the copolymer additionally comprises :
- hydrophilic or hydrophobic nonionic units C_{N}, and/or
- anionic or potentially anionic units C_{A}, and/or
- cationic or potentially cationic units C_{C} which are different from the units A, and/or
- zwitterionic units C_{Z}.

7. Use according to one of Claims 1 to 5, **characterized in that**:
- the copolymer is substantially devoid of zwitterionic units, and
- the copolymer is substantially devoid of anionic or potentially anionic units.

8. Use according to one of the preceding claims, **characterized in that** the vinyllactam is vinylpyrrolidone.

9. Use according to one of the preceding claims, **characterized in that** the units A derive from N,N-dimethyldiallylammonium chloride (DADMAC) and the units B derive from vinylpyrrolidone.

10. Use according to one of the preceding claims, **characterized in that** said composition comprises at least one surfactant.

11. Use according to one of the preceding claims, **characterized in that** said composition comprises at least one liquid vector, preferably an aqueous, alcoholic or aqueous/alcoholic vector.

12. Use according to one of the preceding claims, **characterized in that** the hard surface cleaning is a cleaning of dishes automatically or by hand.

13. Use according to one of the preceding claims, **characterized in that** the copolymer is used as agent which promotes slow dewetting and/or rapid and/or mark-free drying.

14. Use according to one of the preceding claims, **characterized in that** the surface is a textile, the treatment preferably being one in which laundry is cleaned or rinsed, the copolymer being used as agent for protecting the color of the laundry and/or as agent for preventing the transfer of colors.

15. Process for cleaning or rinsing laundry or for cleaning a hard surface, comprising a stage of application to the laundry or the hard surface of a composition as defined in one of claims 1 to 11, said composition being optionally diluted in water beforehand.
